# FASCICULE DE BREVET EUROPEEN

(11) **EP 4 070 144 B1**
(45) Date de publication et mention de la délivrance du brevet: **01.11.2023**
(21) Numéro de dépôt: 20824465.7
(22) Date de dépôt: 30.11.2020
(51) Int. Cl.: G01B 9/02091, G01B 9/04, G02B 21/00, G02B 21/36

(54) **DISPOSITIFS ET PROCÉDÉS DE MICROSCOPIE À BALAYAGE LINÉAIRE**
VORRICHTUNGEN UND VERFAHREN FÜR RASTERMIKROSKOPIE
DEVICES AND METHODS FOR LINE-SCANNING MICROSCOPY

(30) Priorité: 03.12.2019 FR 1913670
(43) Date de publication de la demande: 12.10.2022
(73) Titulaire: Damae Medical, 75013 Paris (FR)
(72) Inventeur: OGIEN, Jonas, 75014 Paris (FR)
(74) Mandataire: Osha Liang
(86) Numéro de dépôt international: PCT/EP2020/083951
(87) Numéro de publication internationale: WO 2021/110595

(56) Documents cités:
- WO-A2-2015/189174
- US-A- 5 321 501
- YU CHEN ET AL: "Real-Time Imaging of Biological Tissues using High Resolution Line-Scanning Optical Coherence Microscopy", CLEO '07. 2007 CONFERENCE ON LASERS AND ELECTRO-OPTICS 5-11 MAY 2007 BALTIMORE, MD, USA, OSA, PISCATAWAY, NJ, USA, 6 mai 2007 (2007-05-06), pages 1-2, XP031230743, ISBN: 978-1-55752-834-6

## Description

### Domaine technique de l'invention

La présente description concerne des dispositifs et procédés de microscopie à balayage linéaire. Plus précisément, les dispositifs et procédés sont basés sur la microscopie tomographique par cohérence optique à balayage linéaire.

### Etat de la technique

La tomographie par cohérence optique ou OCT (abréviation de l'expression anglo-saxonne « *Optical Cohérence Tomography* ») repose sur l'utilisation d'un interféromètre à faible cohérence.

Cette technique d'imagerie, décrite par exemple dans D. Huang et al. [Réf.1] permet de réaliser des images en coupe de tissus, avec une résolution axiale de quelques microns.

Plus précisément, on connaît notamment des techniques d'OCT à balayage.

Dans une version de l'OCT dans le domaine temporel (ou « Time Domain OCT »), telle que décrite dans [Réf. 1], un faisceau de lumière blanche est divisé en deux parties, l'une focalisée sur le tissu à étudier et l'autre sur un miroir de référence. La lumière réfléchie (rétrodiffusée) par l'obj et observé est combinée avec celle réfléchie par le miroir de référence et détectée par un photodétecteur. Une interférence se produit seulement lorsque la différence de chemin optique est tout au plus de l'ordre de la longueur de cohérence du rayonnement ; en modifiant la longueur optique du bras de référence de l'interféromètre on accède à des profondeurs différentes dans l'objet. Une image à 2 voire 3 dimensions peut être construite grâce à l'interférométrie (qui permet l'acquisition selon la dimension axiale, c'est-à-dire la profondeur) et au balayage (qui permet l'acquisition selon une ou deux dimensions latérales). Dans l'OCT à balayage dans le domaine fréquentiel (ou « Frequency Domain OCT »), le bras de référence a une longueur optique fixe et le signal interférométrique est analysé spectralement. Voir à ce propos l'article de A. F. Fercher *et al.* [Réf. 2]. En pratique, l'OCT à balayage permet difficilement d'obtenir des résolutions latérales meilleures qu'environ quelques micromètres.

Dans le but notamment d'améliorer la résolution latérale, l'article de J. A. Izatt *et al.* [Réf. 3] décrit une technique améliorée combinant la tomographie par cohérence optique et la microscopie confocale. La microscopie confocale permet de réduire sensiblement le nombre de photons rétrodiffusés par des zones de l'échantillon situées en dehors du volume de cohérence et perçus par le capteur, ce qui permet d'augmenter le rapport signal sur bruit.

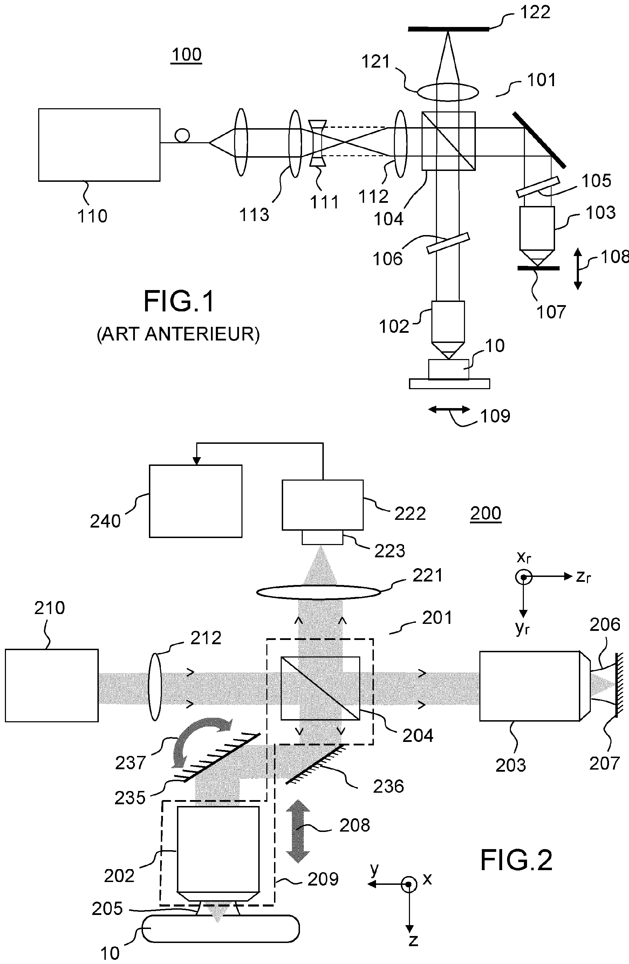

Plus récemment, l'article de Y. Chen *et al.* [Réf. 4] a proposé un dispositif LS-OCM de microscopie tomographique par cohérence optique à balayage linéaire. Un tel dispositif est représenté sur la Fig. 1.

Le dispositif LS-OCM 100 illustré sur la Fig. 1 comprend un microscope interférométrique 101 de type Linnik avec deux objectifs de microscope 102, 103 respectivement dans les bras objet et bras de référence de l'interféromètre, lesdits bras objet et de référence étant séparés par un cube séparateur de faisceaux 104. Le dispositif 100 comprend en outre une source laser 110, dans cet exemple une source laser femtoseconde émettant des impulsions de large bande spectrale (80 nm). Un éclairage linéaire de l'échantillon 10 est obtenu avec un arrangement d'une lentille cylindrique 111 et de lentilles sphériques 112, 113. La puissance optique dans le bras de référence est contrôlée par un filtre de densité neutre 105 et une lame de verre 106 est agencée dans le bras objet pour compenser la dispersion. La lumière provenant des bras objet et de référence est recombinée par le cube séparateur de faisceaux 104 et projetée au moyen d'une lentille 121 sur une caméra linéaire 122, permettant d'obtenir un signal interférométrique. Le signal interférométrique est modulé en actionnant de manière sinusoïdale un miroir de référence 107 agencé dans un plan focal de l'objectif de microscope 103 du bras de référence, au moyen d'un transducteur piézoélectrique 108, et une image d'une ligne de l'échantillon est reconstruite à partir d'une combinaison de quatre signaux d'interférence résultant de la modulation.

Le dispositif de microscopie décrit sur la Fig. 1 présente une configuration de filtrage confocal linéaire ou unidimensionnel (dans une direction) ; en effet, la ligne d'éclairage est conjuguée optiquement avec un détecteur linéaire dont la surface de détection présente une largeur sensiblement identique à une largeur de l'image de la ligne, résultant en un filtrage spatial d'une région de l'objet à observer.

Ainsi, le dispositif de microscopie décrit sur la Fig. 1 présente des avantages liés au filtrage confocal mais permet de gagner en vitesse d'acquisition par rapport à la microscopie tomographique par cohérence optique à balayage décrit dans [Réf. 3] du fait de l'acquisition parallèle sur une ligne.

Par ailleurs, dans la [Réf. 4], des images *en face* de l'échantillon peuvent également être générées en balayant l'échantillon 10 selon une direction perpendiculaire à la ligne d'éclairage, au moyen d'une platine de translation 109.

Bien que permettant la formation d'images *en face* de l'échantillon avec une résolution axiale, c'est-à-dire dans la direction de l'axe optique de l'objectif de microscope 102, d'environ 3 µm, et une résolution latérale, c'est-à-dire dans une direction contenue dans un plan perpendiculaire à l'axe optique de l'objectif de microscope, d'environ 2 µm, le dispositif décrit dans [Réf. 4] n'est cependant pas adapté à la microscopie d'échantillons *in vivo,* l'échantillon devant être déplacé pour la réalisation d'images *en face.* Par ailleurs, s'ils étaient envisagés, des mécanismes de balayage des faisceaux d'illumination et de détection entraîneraient un surcroît d'encombrement du dispositif que l'on cherche à éviter en vue d'une industrialisation. YU CHEN ET AL: "Real-Time Imaging of Biological Tissues using High Resolution Line-Scanning Optical Cohérence Microscopy",CLEO '07. 2007 CONFERENCE ON LASERS AND ELECTRO-OPTICS 5-11 MAY 2007 BALTIMORE, MD, USA, OSA, PISCATAWAY, NJ, USA, 6 mai 2007 (2007-05-06), pages 1-2, ISBN: 978-1-55752-834-6 également divulgue un système de microscopie à cohérence optique à balayage linéaire (OCM) basé sur un laser Ti:Sapphire à large bande et une caméra CCD à balayage linéaire à grande vitesse.

La présente description propose des dispositifs et procédés de microscopie tomographique par cohérence optique à balayage linéaire permettant de former des images *en face* d'un échantillon *in vivo,* avec une acquisition rapide des images et un encombrement réduit pour le dispositif.

### Résumé de l'invention

Dans la présente description, le terme « comprendre » signifie la même chose que « inclure », « contenir », et est inclusif ou ouvert et n'exclut pas d'autres éléments non décrits ou représentés. En outre, dans la présente description, le terme « environ » ou « sensiblement » est synonyme de (signifie la même chose que) une marge inférieure et/ou supérieure de 10%, par exemple 5%, de la valeur respective.

Selon un premier aspect, la présente description concerne un dispositif de microscopie tomographique par cohérence optique à balayage linéaire selon la revendication 1.

Dans la présente description, un axe optique du premier objectif de microscope agencé dans le bras objet est défini par une ligne passant par le centre d'une pupille dudit objectif et sensiblement perpendiculaire au plan de ladite pupille. Celle ligne peut être une ligne brisée s'il y a dans le dispositif des miroirs de renvoi ou autres éléments de déflexion de la lumière.

Ainsi, on appellera de façon générale « direction axiale » dans un espace donné du dispositif, une direction colinéaire à l'axe optique dudit premier objectif de microscope, considéré dans ledit espace.

On appellera de façon générale « direction latérale » dans un espace donné du dispositif, une direction perpendiculaire à l'axe optique dudit premier objectif de microscope, considéré dans ledit espace.

Dans la présente description, la « surface de focalisation » est la surface formée par la ligne de focalisation dans l'espace objet du premier objectif de microscope, pendant le balayage de ladite ligne. L'espace objet du premier objectif de microscope est défini ans la présente description par l'espace dans lequel se situe, en opération, l'objet d'étude. La surface de focalisation est généralement plane, sensiblement perpendiculaire à l'axe optique du premier objectif de microscope, et définie dans une région correspondant à la profondeur de champ dudit objectif de microscope.

La « surface de mise au point » est une surface, dans l'espace objet, conjuguée optiquement avec la surface de détection linéaire par le premier objectif de microscope et l'ensemble des éléments optiques présents entre le premier objectif de microscope et la surface de détection. Le dispositif est réglé en amont de la formation d'images pour que la surface de focalisation soit sensiblement confondue avec la surface de mise au point.

L'arrangement original du dispositif de microscopie tomographique par cohérence optique ainsi décrit, avec un dispositif de balayage unidirectionnel de ladite ligne de focalisation agencé sur le bras objet du microscope interférométrique, en amont dudit premier objectif de microscope, permet la formation d'images *en face* d'échantillons *in vivo,* en maintenant un encombrement réduit pour le dispositif.

L'objet d'étude est par exemple et de façon non limitative une région de peau et s'applique par exemple au diagnostic de différents types et sous-types de cancers de la peau, en particulier les mélanomes, carcinomes basocellulaires et carcinomes spinocellulaires, au diagnostic de pathologies inflammatoires et bulleuses de la peau, à l'évaluation de différents paramètres morphologiques de la peau saine, le suivi de l'évolution de lésions cutanés, l'examen des marges d'exérèse, etc.

Selon un ou plusieurs exemples de réalisation, la source de lumière à large bande spectrale comprend une diode électroluminescente ou une association de diodes électroluminescentes, une diode superluminescente ou une association de diodes superluminescentes, une lampe à filament halogène, une lampe à arc, une source laser à large bande spectrale (source par génération de « supercontinuum » par exemple). Dans tous les cas, la largeur spectrale (à mi-hauteur) de la source sera de préférence supérieure ou égale à 100 nm ; plus cette largeur spectrale est importante, meilleure pourra être la résolution axiale de l'appareil ; la longueur d'onde de centre bande peut être visible ou se situer dans le proche infrarouge ; dans les applications biologiques et médicales on préfère généralement le proche infrarouge, entre 700 nm et 1500 nm. La source peut être polarisée ou non polarisée, spatialement cohérente ou incohérente.

Les sources spatialement cohérentes (de types lasers ou diodes superluminescentes) peuvent être avantageuses en raison de leur plus grande luminance. Par ailleurs, elles permettent, en coopération avec une lentille cylindrique, de former la ligne de focalisation. Selon un ou plusieurs exemples de réalisation, ledit microscope interférométrique est un microscope de Linnik, comprenant en outre un deuxième objectif de microscope agencé sur ledit bras de référence, lesdits bras de référence et objet étant disjoints. Par exemple, le premier objectif de microscope et le deuxième objectif de microscope sont identiques, permettant d'avoir une compensation des effets d'une dispersion chromatique entre les deux bras de l'interféromètre.
Selon un ou plusieurs exemples de réalisation, le bras de référence ne comprend pas d'objectif de microscope. Dans ce cas notamment, le dispositif peut comprendre en outre un élément de compensation de la dispersion chromatique agencé sur l'un et/l'autre desdits bras objet et de référence.
Selon un ou plusieurs exemples de réalisation, ledit premier objectif de microscope et/ou ledit deuxième objectif de microscope, lorsqu'il est présent, est un objectif de microscope à immersion, c'est-à-dire un objectif de microscope immergé dans un milieu dont l'indice de réfraction est sensiblement égal à l'indice de réfraction de l'objet d'étude.
Selon un ou plusieurs exemples de réalisation, ladite surface réfléchissante de référence comprend une surface configurée pour réfléchir environ 5% ou moins de la lumière incidente. Une telle surface réfléchissante de référence comprend par exemple une interface verre /air d'une lame de verre (e.g. du quartz). Bien entendu, d'autres surfaces réfléchissantes avec des coefficients de réflexion plus élevés peuvent être utilisés, comme des miroirs par exemple.

Selon un ou plusieurs exemples de réalisation, le dispositif de microscopie comprend en outre un élément d'atténuation de la puissance optique, agencé sur le bras de référence, permettant de contrôler la différence de puissance optique des faisceaux lumineux se propageant dans chacun des bras du microscope interférométrique. L'élément d'atténuation est par exemple un filtre de densité neutre. Un élément de compensation de la dispersion chromatique, par exemple une lame de verre, peut alors être agencée sur le bras objet pour compenser la dispersion introduite par l'élément d'atténuation.

Selon un ou plusieurs exemples de réalisation, un détecteur avec une surface de détection linéaire est un détecteur linéaire, par exemple une caméra linéaire, de type CCD ou CMOS, comprenant une pluralité de détecteurs élémentaires (ou « pixels ») agencés selon une ou plusieurs lignes pour former une surface de détection unidimensionnelle de largeur donnée. Un détecteur avec une surface de détection linéaire comprend également un détecteur bidimensionnel dont seule une ou plusieurs lignes de pixels sont prises en compte par exemple dont seule une ou plusieurs lignes de pixels sont activées électroniquement.

Selon un ou plusieurs exemples de réalisation, la sélection de la lumière rétrodiffusée par ledit objet et provenant de ladite ligne de focalisation pour le filtrage spatial confocal unidimensionnel est obtenue au moyen de ladite surface de détection linéaire, conjuguée optiquement avec ladite ligne de focalisation, par exemple au moyen du premier objectif de microscope et d'une lentille de tube agencée en aval du microscope interférométrique, et dont la largeur est adaptée à la largeur de l'image de la ligne de focalisation sur la surface de détection. La surface de détection linéaire fait donc partie du dispositif de filtrage spatial confocal unidimensionnel.

Selon un ou plusieurs exemples de réalisation, la sélection de la lumière rétrodiffusée par ledit objet et provenant de ladite ligne de focalisation pour le filtrage spatial confocal unidimensionnel est obtenue au moyen d'un élément de filtrage spatial, par exemple une fente, conjugué optiquement avec ladite ligne de focalisation par le premier objectif de microscope et une lentille de tube agencée en aval du microscope interférométrique. Dans cet exemple, les dimensions de l'élément de filtrage spatial, par exemple la largeur de la fente, est adaptée à la largeur de l'image de la ligne de focalisation dans un plan dudit élément de filtrage spatial. L'élément de filtrage spatial est par exemple conjugué optiquement avec la surface de détection du détecteur.

Dans l'un ou l'autre des deux cas respectivement, la largeur de la surface de détection linéaire ou de la fente pourra être inférieure à 10 fois, avantageusement inférieure à 5 fois la largeur de l'image de la ligne de focalisation. Par exemple, la largeur de la surface de détection linéaire ou de la fente pourra être sensiblement égale à la largeur de l'image de la ligne de focalisation.

Selon un ou plusieurs exemples de réalisation, le dispositif de filtrage spatial confocal unidimensionnel comprend une lentille cylindrique, agencée en amont du microscope interférométrique, et qui coopère avec la source de lumière à large bande spectrale pour former ladite ligne de focalisation dans un espace objet du premier objectif de microscope. La source de lumière à large bande spectrale est par exemple une source de lumière cohérente spatialement, par exemple un laser supercontinuum ou une diode superluminescente. Un tel dispositif de filtrage spatial confocal unidimensionnel est avantageux en ce qu'il permet un éclairage de l'objet selon une ligne avec une puissance optique satisfaisante, par exemple de l'ordre de quelques milliwatts. Cependant, le dispositif de filtrage spatial confocal unidimensionnel peut comprendre, dans d'autres exemples de réalisation, une ouverture linéaire agencée dans un plan conjugué optiquement avec un plan de la source, par exemple une fente, et un objectif en amont du microscope interférométrique qui coopère avec ledit premier objectif de microscope pour former ladite ligne de focalisation.

Selon un ou plusieurs exemples de réalisation, le dispositif de balayage unidirectionnel de la ligne de focalisation comprend une surface réfléchissante, par exemple un miroir, et des moyens de rotation de ladite surface réfléchissante selon un axe de rotation sensiblement perpendiculaire à l'axe optique du premier objectif de microscope.

Le dispositif de balayage unidirectionnel de la ligne de focalisation est agencé sur le bras objet, en amont du premier objectif de microscope.

Selon un ou plusieurs exemples de réalisation, la surface réfléchissante du dispositif de balayage est conjuguée optiquement avec une pupille d'entrée du premier objectif de microscope pour limiter tout effet de vignettage.

Selon d'autres exemples de réalisation, la surface réfléchissante du dispositif de balayage est simplement agencée à proximité dudit premier objectif de microscope pour limiter un vignettage possible du faisceau d'éclairage au niveau de la pupille d'entrée du premier objectif de microscope et limiter un vignettage de la lumière rétrodiffusée par l'objet. En particulier, aucun élément optique pour la conjugaison optique de la surface réfléchissante du dispositif de balayage et de la pupille d'entrée du premier objectif de microscope n'est introduit, ce qui permet de favoriser la compacité du dispositif.

Selon un ou plusieurs exemples de réalisation, l'unité de traitement comprend une ou plusieurs entités physiques, par exemple un ou plusieurs ordinateurs. Lorsque dans la présente description, il est fait référence à des étapes de calcul ou traitement pour la mise en oeuvre notamment d'étapes de procédés, il est entendu que chaque étape de calcul ou traitement peut être mis en oeuvre par logiciel, hardware, firmware, microcode ou toute combinaison appropriée de ces technologies. Lorsqu'un logiciel est utilisé, chaque étape de calcul ou traitement peut être mise en oeuvre par des instructions de programme d'ordinateur ou du code logiciel. Ces instructions peuvent être stockées ou transmises vers un support de stockage lisible par l'unité de traitement et/ou être exécutées par l'unité de traitement afin de mettre en oeuvre ces étapes de calcul ou traitement. Selon un ou plusieurs exemples de réalisation, l'unité de traitement est reliée à un écran et/ou interface pour l'interface avec un utilisateur.

Selon un ou plusieurs exemples de réalisation, une image tomographique unidimensionnelle est générée à partir d'une pluralité d'images interférométriques unidimensionnelles en déterminant une dispersion des valeurs entre des images successives de ladite pluralité d'images. La dispersion est déterminée sur la pluralité d'images interférométriques unidimensionnelles successives en parallèle pour chaque point. Par exemple, la détermination de ladite image tomographique unidimensionnelle comprend le calcul de la variance de ladite pluralité d'images interférométriques unidimensionnelles successives. Selon un ou plusieurs exemples de réalisation, ladite pluralité d'images interférométriques unidimensionnelles comprend entre 2 et 20, avantageusement entre 2 et 10 images interférométriques unidimensionnelles.

Selon un ou plusieurs exemples de réalisation, l'unité de traitement est configurée pour :
- produire une pluralité d'images tomographiques unidimensionnelles dudit objet, chaque image de ladite pluralité d'images tomographiques unidimensionnelles étant produite à partir d'une pluralité d'images interférométriques unidimensionnelles acquises par ledit détecteur pour différentes positions de ladite ligne de focalisation au cours dudit balayage unidirectionnel; et
- produire ladite image tomographique bidimensionnelle *en face* dudit objet à partir d'une pluralité desdites images tomographiques unidimensionnelles.

Dans ces exemples de réalisation, un déplacement de la surface réfléchissante de référence n'est pas nécessaire pour l'acquisition d'une image tomographique unidimensionnelle ; en effet, du fait du balayage de la ligne de focalisation, et si la surface réfléchissante du dispositif de balayage de la ligne de focalisation n'est pas conjuguée optiquement avec la pupille d'entrée du premier objectif de microscope, une pluralité d'images interférométriques unidimensionnelles (ou signaux interférométriques unidimensionnelles) peuvent être produites par le microscope interférométrique et acquises par le détecteur pour une pluralité de positions successives de la ligne de focalisation dans l'objet, les images interférométriques de ladite pluralité d'images interférométriques présentant en chaque point des états d'interférence différents correspondant à des différences de marche différentes entre la lumière issue du bras de référence et la lumière issue du bras objet. A partir de ladite pluralité d'images interférométriques unidimensionnelles, il est possible de produire une image tomographique unidimensionnelle.

Selon un ou plusieurs exemples de réalisation, le dispositif de microscopie selon le premier aspect comprend des moyens de déplacement unidirectionnel de ladite surface réfléchissante de référence selon une direction axiale.

Selon un ou plusieurs exemples de réalisation, l'unité de traitement est configurée pour :
- produire une pluralité d'images tomographiques unidimensionnelles dudit objet, chaque image de ladite pluralité d'images tomographiques unidimensionnelles étant produite à partir d'une pluralité d'images interférométriques unidimensionnelles acquises par ledit détecteur pour différentes positions de la surface réfléchissante de référence ; et
- produire ladite image tomographique bidimensionnelle *en face* dudit objet à partir d'une pluralité desdites images tomographiques unidimensionnelles.

Dans ces exemples de réalisation, une image tomographique unidimensionnelle est produite à partir d'une pluralité d'images interférométriques unidimensionnelles acquises par ledit détecteur pour différentes positions de la surface réfléchissante de référence, entraînant des différences de marche différentes entre la lumière issue du bras de référence et la lumière issue du bras objet, et donc des états d'interférence différents pour les images interférométriques de ladite pluralité d'images interférométriques unidimensionnelles. Dans ces exemples de réalisation, le déplacement de la ligne de focalisation pendant la production d'une image interférométrique unidimensionnelle est avantageusement sensiblement nul ou suffisamment faible pour ne pas détériorer l'image tomographique ainsi produite.

Selon un ou plusieurs exemples de réalisation, lesdits moyens de déplacement de ladite surface réfléchissante de référence sont configurés pour introduire en outre un déplacement axial additionnel de ladite surface réfléchissante de référence permettant de compenser un déphasage introduit par le dispositif de balayage de la ligne de focalisation.

La déposante a montré en effet que lors du balayage unidirectionnel de la ligne de focalisation pour la production d'une image *en face,* la « surface de cohérence », c'est à dire la surface de différence de marche nulle qui est la surface effectivement observable, n'est pas rigoureusement plane mais prend la forme d'une surface parabolique. Il peut en résulter une image *en face* « floue ». L'introduction d'un déplacement axial additionnel de ladite surface réfléchissante de référence permet alors d'introduire un déphasage de compensation afin d'obtenir une meilleure superposition de la surface de cohérence et de la surface de focalisation, et de produire une image *en face* sensiblement plane et avec une meilleure netteté.

Selon un ou plusieurs exemples de réalisation, le dispositif de microscopie selon le premier aspect comprend en outre une surface réfléchissante de renvoi agencé dans le bras de référence et des moyens de déplacement de ladite surface réfléchissante de renvoi, selon l'une et/ou l'autre d'une direction axiale et d'une direction latérale.

Selon un ou plusieurs exemples de réalisation, ladite unité de traitement est configurée pour :
- produire une pluralité d'images tomographiques unidimensionnelles dudit objet, chaque image de ladite pluralité d'images tomographiques unidimensionnelles étant produite à partir d'une pluralité d'images interférométriques unidimensionnelles acquises par ledit détecteur pour différentes positions de ladite surface réfléchissante de renvoi ; et
- produire ladite image tomographique bidimensionnelle *en face* dudit objet à partir d'une pluralité desdites images tomographiques unidimensionnelles.

Déplacer une surface réfléchissante de renvoi agencée dans le bras de référence du microscope interférométrique permet de gagner encore en encombrement du dispositif de microscopie puisqu'on peut s'affranchir ainsi d'un déplacement de la surface réfléchissante de référence. Par ailleurs, notamment lorsque la surface réfléchissante de référence est dans un plan focal d'un objectif de microscope, on limite le risque de variation de l'intensité lumineuse de la lumière issue du bras de référence lors d'un déplacement de ladite surface réfléchissante de référence, une telle variation pouvant résulter d'impuretés sur la surface réfléchissante de référence et pouvant entraîner des artefacts dans l'image.

Selon un ou plusieurs exemples de réalisation, pour chaque image de ladite pluralité d'images tomographiques unidimensionnelles, lesdits moyens de déplacement de ladite surface réfléchissante de renvoi sont configurés pour introduire en outre un déplacement additionnel de ladite surface réfléchissante de renvoi permettant de compenser un déphasage introduit par le dispositif de balayage de la ligne de focalisation.

Bien entendu, la compensation d'un déphasage introduit par le dispositif de balayage de la ligne de focalisation peut également être obtenu au moyen d'un déplacement axial additionnel de ladite surface réfléchissante de référence même lorsque les images tomographiques unidimensionnelles sont produites par acquisition d'une pluralité d'images interférométriques unidimensionnelles pour différentes positions de ladite surface réfléchissante de renvoi. Inversement, la compensation d'un déphasage introduit par le dispositif de balayage de la ligne de focalisation peut être obtenu au moyen d'un déplacement additionnel de ladite surface réfléchissante de renvoi même lorsque les images tomographiques unidimensionnelles sont produites par acquisition d'une pluralité d'images interférométriques unidimensionnelles pour différentes positions de la surface réfléchissante de référence.

Selon un ou plusieurs exemples de réalisation, le dispositif de microscopie tomographique selon le premier aspect comprend en outre des moyens de déplacement axial de ladite ligne de focalisation, selon une direction parallèle audit axe optique dudit premier objectif de microscope pour un déplacement de ladite ligne de focalisation en profondeur dans l'objet. On déplace alors la surface de focalisation en profondeur dans l'objet.

Selon un ou plusieurs exemples de réalisation, l'unité de traitement est configurée pour produire en outre une image tridimensionnelle dudit objet à observer, à partir d'une pluralité d'images *en face* produites pour différentes surfaces de focalisation.

Selon un ou plusieurs exemples de réalisation, lesdits moyens de déplacement axial de la ligne de focalisation comprennent des moyens de déplacement solidaire d'un ensemble comprenant ledit premier objectif de microscope et ledit séparateur de faisceaux, selon une direction parallèle audit axe optique dudit premier objectif de microscope. Une telle configuration est avantageuse en ce qu'elle permet de déplacer simultanément et solidairement la surface de cohérence et la surface de focalisation, au cours du balayage axial, tout en minimisant le poids à déplacer.

Bien entendu, d'autres moyens de déplacement axial de la ligne de focalisation peuvent être envisagés.

Par exemple, et de façon non limitative, lesdits moyens de déplacement axial de la ligne de focalisation peuvent comprendre des moyens de déplacement solidaire d'un ensemble comprenant ledit premier objectif de microscope et ledit dispositif de balayage unidirectionnel de la ligne de focalisation ou d'un ensemble comprenant ledit premier objectif de microscope ladite surface réfléchissante de renvoi du bras de référence lorsqu'elle est présente, ou d'un ensemble comprenant tous les éléments dudit microscope interférométrique.

Dans les exemples cités ci-dessus, on pourra choisir pour ledit premier objectif de microscope et le dit deuxième objectif de microscope s'il est présent, un objectif de microscope à immersion. En effet, dans ces exemples, les mouvements de la surface de cohérence et de la surface de focalisation sont solidaires ; l'adaptation de l'indice de réfraction de l'objet d'étude avec celui du milieu dans lequel est immergé le premier objectif de microscope permet de les maintenir confondus.

Selon d'autres exemples de réalisation, lesdits moyens de déplacement axial de la ligne de focalisation peuvent comprendre des moyens de déplacement indépendants du premier objectif de microscope d'une part et de l'ensemble formé du deuxième objectif de microscope, lorsqu'il est présent, avec la surface réfléchissante de référence, d'autre part. lesdits moyens de déplacement axial de la ligne de focalisation peuvent également comprendre des moyens de déplacement indépendants du premier objectif de microscope d'une part et d'une surface réfléchissante de renvoi agencée sur le bras de référence, d'autre part.

Dans ces exemples, les mouvements de la surface de cohérence et de la surface de focalisation sont désolidarisés et on peut déplacer les deux plans d'une quantité différente de manière à les maintenir confondus.

Selon un deuxième aspect, la présente description concerne un procédé de microscopie tomographique par cohérence optique à balayage linéaire selon la revendication 11. sensiblement perpendiculaire à un axe optique dudit premier objectif de microscope, au moyen d'un dispositif de balayage agencé sur ledit bras objet en amont dudit premier objectif de microscope;
- la production, au moyen d'une unité de traitement d'au moins une image tomographique bidimensionnelle *en face* dudit objet à observer, agencée dans un plan sensiblement perpendiculaire audit axe optique de l'objectif de microscope, à partir d'une pluralité d'images interférométriques unidimensionnelles acquises par ledit détecteur pour différentes positions de ladite ligne de focalisation au cours dudit balayage unidirectionnel.

Selon un ou plusieurs exemples de réalisation, la production de ladite au moins une image tomographique bidimensionnelle *en face* dudit objet comprend :
- la production d'une pluralité d'images tomographiques unidimensionnelles dudit objet, chaque image de ladite pluralité d'images tomographiques unidimensionnelles étant produite à partir d'une pluralité d'images interférométriques unidimensionnelles acquises par ledit détecteur pour différentes positions de ladite ligne de focalisation au cours dudit balayage unidirectionnel; et
- la production de ladite image tomographique bidimensionnelle *en face* dudit objet à partir d'une pluralité desdites images tomographiques unidimensionnelles.

Selon un ou plusieurs exemples de réalisation, la production de ladite au moins une image tomographique bidimensionnelle *en face* dudit objet comprend :
- la production d'une pluralité d'images tomographiques unidimensionnelles dudit objet, chaque image de ladite pluralité d'images tomographiques unidimensionnelles étant produite à partir d'une pluralité d'images interférométriques unidimensionnelles acquises par ledit détecteur pour différentes positions de la surface réfléchissante de référence ou pour différentes positions d'une surface réfléchissante de renvoi agencé dans le bras de référence; et
- la production de ladite image tomographique bidimensionnelle *en face* dudit objet à partir d'une pluralité desdites images tomographiques unidimensionnelles.

Selon un ou plusieurs exemples de réalisation, le procédé comprend en outre, pour chaque image de ladite pluralité d'images tomographiques unidimensionnelles, l'introduction d'un déplacement axial additionnel de ladite surface réfléchissante de référence ou l'introduction d'un déplacement additionnel de ladite surface réfléchissante de renvoi, pour compenser un déphasage introduit par le dispositif de balayage de la ligne de focalisation.

Selon un ou plusieurs exemples de réalisation, le procédé comprend en outre :
- le déplacement axial de ladite ligne de focalisation en profondeur dans l'objet, selon une direction parallèle audit axe optique dudit premier objectif de microscope ;
- la production d'une image tridimensionnelle dudit objet à observer, à partir d'une pluralité d'images *en face* produites pour différentes profondeurs de la ligne de focalisation.

### Brève description des figures

D'autres avantages et caractéristiques de l'invention apparaîtront à la lecture de la description, illustrée par les figures suivantes :
[Fig. 1], déjà décrite, représente un schéma illustrant un dispositif de microscopie tomographique par cohérence optique à balayage linéaire (LS-OCM) d'un objet, connu de l'état de l'art ;
[Fig. 2] représente un schéma illustrant un exemple de dispositif de microscopie tomographique par cohérence optique à balayage linéaire, selon la présente description ;
[Fig. 3A] illustre selon une première vue, le fonctionnement de moyens de filtrage spatial confocal unidimensionnel dans un dispositif de microscopie tomographique par cohérence optique à balayage linéaire, selon un exemple de la présente description ;
[Fig. 3B] illustre des moyens de filtrage spatial confocal unidimensionnel tels qu'illustrés sur la Fig. 3A, selon une deuxième vue ;
[Fig. 4A] représente un schéma illustrant un exemple de dispositif de microscopie tomographique par cohérence optique à balayage linéaire, selon la présente description ;
[Fig. 4B] représente un schéma illustrant un exemple de dispositif de microscopie tomographique par cohérence optique à balayage linéaire, selon la présente description ;
[Fig. 4C] représente un schéma illustrant un exemple de dispositif de microscopie tomographique par cohérence optique à balayage linéaire, selon la présente description ;
[Fig. 5A] représente un schéma illustrant selon un exemple le balayage unidirectionnel de la ligne de focalisation, en fonction du temps ;
[Fig. 5B] représente un schéma illustrant, selon un exemple, une coupe de la surface de cohérence lorsque la ligne de focalisation est déplacée latéralement selon le balayage illustré sur la Fig. 5A et la surface de cohérence lorsque la ligne de focalisation est déplacée latéralement selon le balayage illustré sur la Fig. 5A, avec compensation au moyen d'une variation de position axiale de la surface réfléchissante de référence, également représentée sur la Fig.5B ;
[Fig. 5C] représente un schéma illustrant, selon un exemple, une coupe de la surface de cohérence lorsque la ligne de focalisation est déplacée latéralement selon le balayage illustré sur la Fig. 5A et la surface de cohérence lorsque la ligne de focalisation est déplacée latéralement selon le balayage illustré sur la Fig. 5A, avec compensation par paliers au moyen d'une variation de position axiale de la surface réfléchissante de référence, également représentée sur la Fig.5C ;
[Fig. 6A] représente un schéma illustrant selon un exemple la surface de cohérence dans un exemple de dispositif de microscopie tomographique par cohérence optique à balayage linéaire selon la présente description, sans compensation ;
[Fig. 6B] représente un schéma illustrant selon un exemple la surface de cohérence dans un exemple de dispositif de microscopie tomographique par cohérence optique à balayage linéaire selon la présente description, avec compensation ;
[Fig. 7] représente des images d'un échantillon obtenues au moyen d'un exemple de procédé selon la présente description, avec et sans compensation.

### Description détaillée de l'invention

Dans la description détaillée qui suit, de nombreux détails spécifiques sont exposés afin de fournir une compréhension plus approfondie de la présente description. Cependant, il apparaîtra à l'homme du métier que la présente description peut être mise en oeuvre sans ces détails spécifiques. Dans d'autres cas, des caractéristiques bien connues n'ont pas été décrites en détail pour éviter de compliquer inutilement la description.

Par ailleurs, sur les figures, les éléments ne sont pas représentés à l'échelle pour une meilleure visibilité.

La Fig. 2 représente un schéma illustrant un exemple de dispositif de microscopie tomographique par cohérence optique à balayage linéaire, selon la présente description.

Le dispositif de microscopie tomographique 200 représenté sur la Fig. 2 comprend une source de lumière 210 à large bande spectrale, un détecteur 222 avec une surface de détection linéaire 223, par exemple une caméra linéaire de type CCD ou CMOS, une unité de traitement 240 configurée notamment pour traiter des signaux issus du détecteur 222 et un microscope interférométrique 201.

Le microscope interférométrique 201 comprend notamment un bras de référence à l'extrémité duquel est agencée une surface réfléchissante de référence 207, un bras objet configuré pour recevoir un objet à imager 10, un séparateur de faisceaux 204 couplant les bras objet et de référence à la source de lumière 210 et au détecteur, et au moins un premier objectif de microscope 202 agencé sur ledit bras objet. Le microscope interférométrique est pas exemple un microscope de type Linnik, comme illustré sur la Fig. 2, avec un deuxième objectif de microscope 203 identique au premier objectif de microscope 202, agencé sur le bras de référence et dans le plan focal duquel se trouve la surface réfléchissante de référence 207. Dans l'exemple de la Fig. 2, les objectifs de microscope 202, 203 sont des objectifs à immersion, immergés dans un liquide d'indice 205, 206, c'est à dire un liquide dont l'indice de réfraction est adapté à l'indice de réfraction de l'objet 10. Le microscope interférométrique 201 peut comprendre en outre de façon connue un élément d'atténuation de la puissance optique (non représenté), agencé sur le bras objet et/ou un élément de compensation de la dispersion chromatique (non représenté) agencé sur l'un et/l'autre desdits bras objet et de référence.

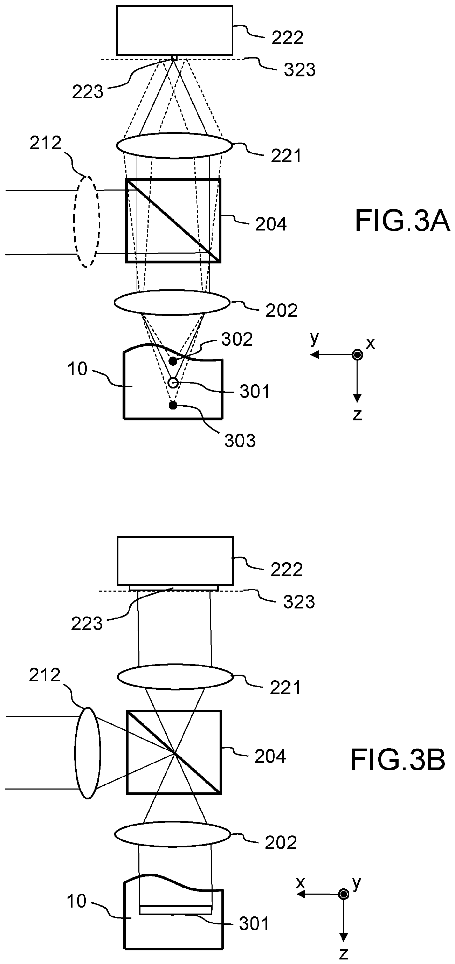

Le dispositif de microscopie tomographique 200 comprend en outre un dispositif de filtrage spatial confocal unidimensionnel, comprenant notamment une lentille cylindrique 212. Le dispositif de filtrage confocal est configuré pour coopérer avec la source de lumière pour éclairer l'objet 10 selon une ligne de focalisation située dans un espace objet du premier objectif de microscope (ici l « espace objet » est défini du point de vue de l'imagerie, c'est-à-dire l'espace de l'objectif de microscope dans lequel, en opération, l'objet d'étude se situe). Il est configuré également pour sélectionner la lumière rétrodiffusée par l'objet et provenant de ladite ligne de focalisation pour former une image unidimensionnelle de la ligne de focalisation sur la surface de détection 223. Des exemples de dispositif de filtrage spatial confocal unidimensionnel seront décrits plus en détails en référence aux Figs 3A et 3B.

Dans l'exemple de la Fig. 2, l'axe optique du premier objectif de microscope 202, défini par une ligne passant par le centre d'une pupille de l'objectif et sensiblement perpendiculaire au plan de ladite pupille, est référencé par un axe z dans l'espace de l'objet 10. Les axes x et y correspondent, dans l'exemple de la Fig. 2, à deux directions latérales dans l'espace de l'objet 10, c'est-à-dire deux directions orthogonales entre elles et perpendiculaires à l'axe optique z du premier objectif de microscope 202. Dans l'espace de la surface réfléchissante de référence, on note zᵣ la direction axiale, c'est-à-dire la direction colinéaire à l'axe optique du premier objectif de microscope, considéré dans cet espace, et xᵣ, yᵣ, les directions latérales.

Dans un microscope interférométrique d'un dispositif selon la présente description, du fait de la faible longueur de cohérence temporelle de la source à large bande spectrale, les interférences entre la lumière réfléchie par la surface réfléchissante de référence 207 et celle rétrodiffusée par l'objet 10 ne se produisent que lorsque les chemins optiques dans les bras objet et de référence sont égaux, avec une tolérance égale à la longueur de cohérence de la source.

On appelle « surface de cohérence » (ou « surface de différence de marche nulle ») dans la présente description, la tranche virtuelle dans l'objet pour laquelle des interférences peuvent se produire. La surface de cohérence est la surface que l'on peut effectivement observer. On appelle « image interférométrique », le signal d'interférence résultant de l'acquisition par le détecteur des interférences formées sur la surface de détection. Ainsi, chaque point d'une image interférométrique présente un « état d'interférence » donné, c'est à dire une différence de marche entre la lumière issue des bras objet et de référence pour ledit point inférieure à la longueur de cohérence. Dans la présente description, l'image interférométrique est unidimensionnelle du fait de l'éclairage et de la détection confocaux linéaires. La lumière rétrodiffusée par l'objet de part et d'autre de la surface de cohérence contribue à créer un fond lumineux constant dans le signal d'interférence. En modifiant la différence de marche entre les deux bras du microscope interférométrique, selon des moyens qui seront décrits pas la suite, on peut moduler les états d'interférence des points entre des images successives. Une combinaison des images interférométriques unidimensionnelles acquises par le détecteur permet alors de former une image tomographique unidimensionnelle.

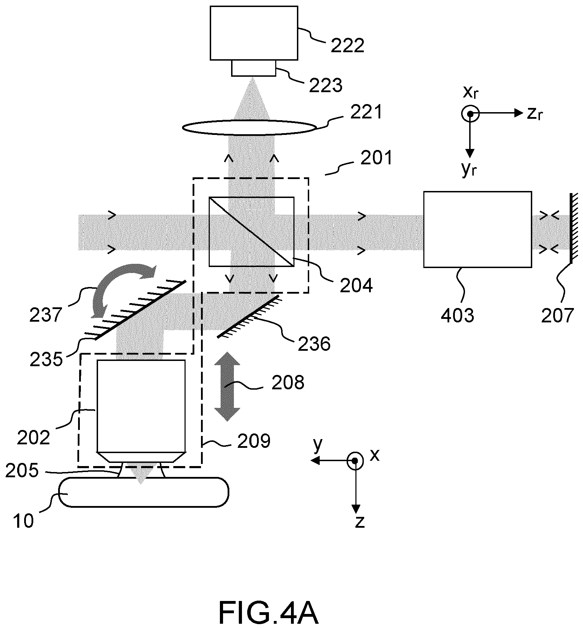

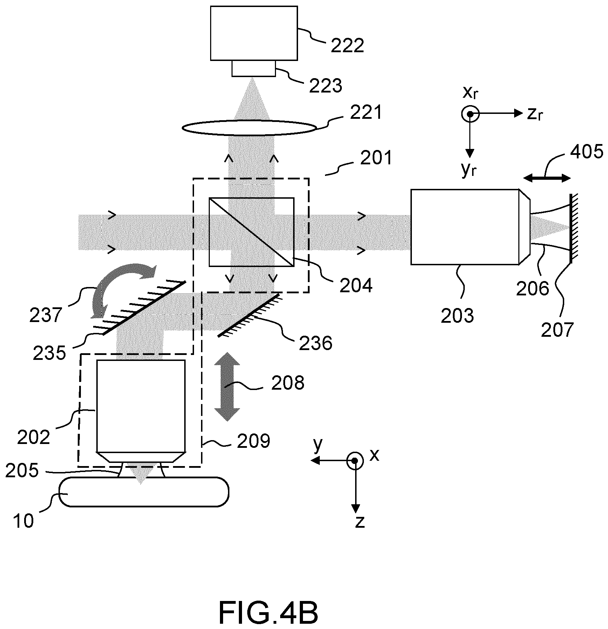

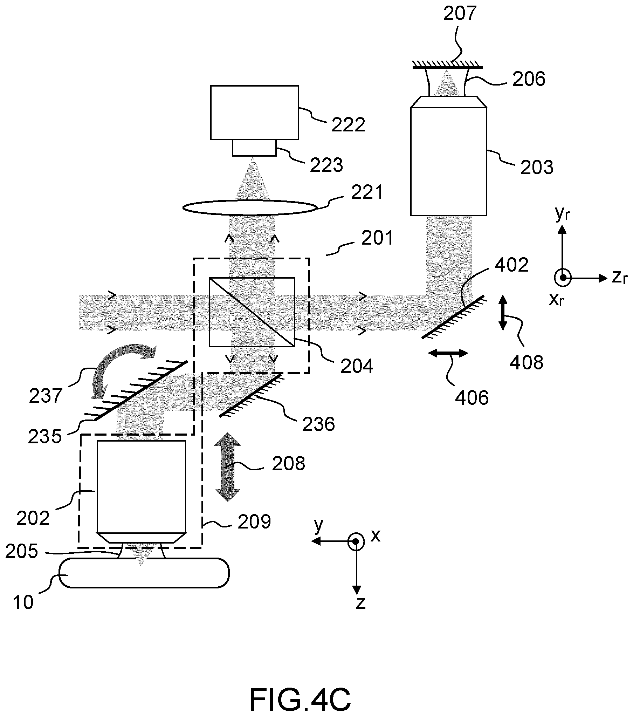

Différents moyens mis en oeuvre pour modifier la différence de marche entre les deux bras du microscope interférométrique sont notamment décrits en référence aux Figs 4A, 4B et 4C ci-dessous.

En pratique, lorsque la différence de marche entre des images interférométriques unidimensionnelles successives est générée selon une loi connue, on peut déterminer l'image tomographique unidimensionnelle à partir desdites images interférométriques en se basant sur cette loi.

Par exemple, une approche simple pour la formation de l'image tomographique unidimensionnelle est basée sur l'utilisation d'une méthode dite d'interférométrie à décalage de phase, consistant à combiner numériquement plusieurs images interférométriques unidimensionnelles déphasées. Par exemple, on peut combiner quatre images interférométriques unidimensionnelles correspondant à des positions de la ligne de focalisation espacées de λ/8n dans la direction axiale, λ étant la longueur d'onde centrale de la lumière d'éclairage dans l'objet et n l'indice dans lequel le premier objectif de microscope est immergé. Cela correspond à un déphasage de π/2 entre deux images adjacentes. Si l'on indique par E₁, E₂, E₃, E₄ ces images, (E₁- E₃)² + (E₂- E₄)² correspond à l'amplitude du signal d'interférence - c'est-à-dire à l'amplitude de l'image reconstituée - et (E₁- E₃)/ (E₂- E₄) correspond à la phase du signal d'interférence. Cette phase peut fournir d'autres informations que des informations structurelles et tomographiques sur l'objet. Il faut noter qu'il n'y a pas de contradiction entre la notion de décalage de phase, ou déphasage, et le fait, mentionné plus haut, que la ligne de focalisation correspond toujours à une différence de chemin optique entre les bras objet et de référence égale à zéro. En effet, une structure quelconque de l'objet, susceptible de rétrodiffuser la lumière, n'est pas observée uniquement lorsqu'elle coïncide avec la ligne de focalisation, mais également avant et après (car la « porte » de cohérence et celle introduite par le filtrage confocal ont une largeur supérieure à λ). Il y a donc bien un décalage de phase entre les contributions de cette structure aux images acquises successivement au cours du balayage axial.

En variante, on peut également utiliser un algorithme adapté à un déphasage sinusoïdal entre les images successives. Par exemple, une pluralité d'images interférométriques unidimensionnelles peut être traitée par analyse de Fourier afin d'extraire l'enveloppe des franges d'interférence (l'amplitude du signal d'interférence) et éliminer la partie non modulée du signal (signal non interférométrique). Un déphasage sinusoïdal peut être obtenu par exemple, mais non exclusivement, dans le cas où la surface de référence est modulée de façon sinusoïdale.

De façon générale, la déposante a montré qu'on pouvait générer une image tomographique unidimensionnelle à partir d'une pluralité d'images interférométriques unidimensionnelles en déterminant la dispersion entre les images successives de ladite pluralité d'images interférométriques unidimensionnelles. Il n'est alors pas nécessaire de connaître précisément la loi de variation de la différence de marche entre les images interférométriques unidimensionnelles successives. Par exemple, pour générer une image tomographique unidimensionnelle, on pourra calculer la variance de N images interférométriques unidimensionnelles successives, N étant compris par exemple entre 2 et 20, avantageusement entre 2 et 10, par exemple autour de 5.

La source 210 à large bande spectrale comprend par exemple un laser supercontinuum, la longueur de cohérence étant typiquement comprise entre 1 et 5 µm.

Le dispositif de microscopie tomographique 200 comprend en outre un dispositif 235, 237 de balayage unidirectionnel de ladite ligne de focalisation, agencé sur le bras objet en amont du premier objectif de microscope 202. Le dispositif de balayage unidirectionnel comprend par exemple, et de façon non limitative, une surface réfléchissante 235 et des moyens de rotation 237 de la surface réfléchissante, selon un axe de rotation perpendiculaire à l'axe optique du premier objectif de microscope. Le dispositif de balayage est par exemple formé d'un miroir galvanométrique. Le dispositif de balayage unidirectionnel de la ligne de focalisation est configuré pour un balayage de la ligne de focalisation selon une direction latérale (référencée y dans l'exemple de la Fig. 2) sensiblement perpendiculaire à l'axe optique z dudit premier objectif de microscope.

Il est alors possible, selon la présente description, de produire, au moyen de l'unité de traitement 240, au moins une image tomographique bidimensionnelle *en face* de l'objet 10, c'est-à-dire une image tomographique bidimensionnelle agencée dans un plan x, y sensiblement perpendiculaire à l'axe optique de l'objectif de microscope, à partir d'une pluralité d'images interférométriques unidimensionnelles de l'objet acquises par le détecteur pour différentes positions de ladite ligne de focalisation au cours du balayage unidirectionnel.

Du fait du positionnement du dispositif de balayage unidirectionnel de la ligne de focalisation dans le bas objet du microscope interférométrique 201, l'encombrement du dispositif 200 pour l'acquisition de l'image en face est réduit.

Selon un exemple de réalisation, la surface réfléchissante du dispositif de balayage de la ligne de focalisation est conjuguée optiquement avec la pupille d'entrée du premier objectif de microscope 202, par exemple au moyen d'une lentille optique. Cela permet d'éviter un vignettage du faisceau d'éclairage au niveau de la pupille d'entrée du premier objectif de microscope ainsi qu'un vignettage de la lumière rétrodiffusée par l'objet. Cependant, cette configuration complexifie le montage et augmente l'encombrement du dispositif. On préféra de ce fait, comme illustré sur la Fig. 2, positionner la surface réfléchissante du dispositif de balayage en amont du premier objectif de microscope 202, à proximité du premier objectif de microscope pour limiter le vignettage, c'est-à-dire au plus proche de la pupille de l'objectif selon ce qui est accessible au vu des contraintes mécanique d'intégration du dispositif de balayage.

L'unité de traitement 240 est de façon générale configurée pour la mise en oeuvre d'étapes du procédé selon la présente description. L'unité de traitement 240 peut être reliée à un écran et/ou interface (non représentés sur la Fig. 2) pour l'interface avec un utilisateur. L'unité de traitement peut également comprendre des moyens de contrôle des moyens de rotation 237 de la surface réfléchissante et/ou des moyens de contrôle d'autres éléments mobiles du dispositif de microscopie tomographique selon la présente description.

Les Fig. 3A et 3B illustrent selon deux plans de coupe perpendiculaires (respectivement les plans yz et xz contenant l'axe optique z de l'objectif de microscope 202), le filtrage spatial confocal unidimensionnel dans un dispositif de microscopie tomographique par cohérence optique à balayage linéaire, selon un exemple de la présente description. Sur ces figures, seuls les éléments du dispositif de microscopie tomographique utiles à la compréhension du filtrage spatial confocal unidimensionnel sont représentés.

Dans cet exemple, le dispositif de filtrage spatial confocal unidimensionnel comprend une lentille cylindrique 212, agencée en amont du microscope interférométrique, et qui coopère avec la source de lumière à large bande spectrale pour former une ligne de focalisation 301 dans l'espace objet du premier objectif de microscope 202. Lors du balayage de la ligne de focalisation, la ligne de focalisation se déplace sur une surface de focalisation, sensiblement confondues avec une surface de mise au point. Une telle surface de focalisation est généralement plane, sensiblement confondue avec un plan focal du premier objectif de microscope 202 si le faisceau incident sur ledit premier objectif de microscope est collimaté. La source de lumière à large bande spectrale est par exemple une source de lumière cohérente spatialement, par exemple un laser supercontinuum. Un tel dispositif de filtrage spatial confocal unidimensionnel est avantageux en ce qu'il permet un éclairage de l'objet avec une puissance optique satisfaisante.

La sélection de la lumière rétrodiffusée par l'objet 10 et provenant de ladite ligne de focalisation 301 pour le filtrage spatial confocal unidimensionnel est obtenue en outre dans cet exemple au moyen d'une surface de détection 323 linéaire du détecteur 322, conjuguée optiquement avec la ligne de focalisation au moyen du premier objectif de microscope 202 et d'une lentille de tube 221 agencée en aval du microscope interférométrique. La largeur de la surface de détection 323 est déterminée en fonction de la largeur de l'image de la ligne de focalisation sur la surface de détection. La surface de détection linéaire se comporte ainsi comme une fente de filtrage de largeur donnée, et fait donc partie du dispositif de filtrage spatial confocal unidimensionnel. A noter que la sélection de la lumière rétrodiffusée par l'objet 10 et provenant de ladite ligne de focalisation 301 peut être obtenue également par une fente de filtrage séparée de la surface de détection (non représentée dans l'exemple des Figs 3A, 3B), optiquement conjuguée avec la ligne de focalisation 301 et la surface de détection 323.

Ainsi, dans le plan yz (Fig. 3A) perpendiculaire à la fente de filtrage formée par la surface de détection 323, seule la lumière provenant de la région de l'objet où la ligne de focalisation 301 est formée par la lentille cylindrique 212 et le premier objectif de microscope 202 (faisceau représenté en trait continu) est détectée par le détecteur 222 tandis que la lumière provenant d'autres régions 302, 303 de l'objet (faisceaux en lignes pointillées par exemple) est très fortement atténuée. Dans un plan parallèle à la fente de filtrage (plan xz sur Fig. 3B), un tel filtrage ne se produit pas.

Le filtrage spatial confocal est complémentaire du filtrage « cohérent » résultant de l'interférométrie à faible longueur de cohérence avec une source à large bande spectrale, dont le principe est rappelé ci-dessus. Notamment, le filtrage confocal améliore les performances de l'imagerie interférométrique en supprimant le « fond » produit par la diffusion de la lumière provenant de zones de l'échantillon situées en dehors du plan de focalisation et par des réflexions parasites. Toute la dynamique du détecteur est ainsi utilisée pour détecter le signal interférométrique utile et le rapport signal à bruit est amélioré. Par ailleurs, l'interférométrie - même à faible longueur de cohérence - ne permet pas de distinguer entre un photon balistique provenant de la région imagée dans l'objet et un photon provenant d'autres régions de l'objet et ayant parcouru un trajet optique de même longueur en raison des diffusions subies. Il en résulte un signal interférométrique parasite qui s'ajoute au signal interférométrique utile, créant des artefacts dans les images et limitant la profondeur d'imagerie accessible. Dans le dispositif selon la présente description, le filtrage confocal ne laisse passer que les photons balistiques, supprimant ce fond.

Par rapport à un filtrage confocal seul, l'utilisation d'une détection interférométrique permet une considérable amplification du signal utile (dans le cas de la microscopie confocale « pure », c'est le faible rapport signal sur bruit qui limite la profondeur d'acquisition). Dans le dispositif selon la présente description, il y a donc synergie - et non simple juxtaposition - entre les deux principes mis en jeu : microscopie par interférométrie à faible longueur de cohérence et microscopie confocale à fente.

Les Figs 4A, 4B, 4C illustrent trois exemples de dispositifs de microscopie tomographique pour la mise en oeuvre de procédés selon la présente description.

Sur ces schémas, seuls les éléments du dispositif nécessaires à la compréhension du procédé selon la présente description sont illustrés. Notamment, les moyens d'éclairage et le dispositif de filtrage spatial confocal ainsi que l'unité de traitement ne sont pas illustrés. Bien que certains exemples de réalisation ne soient illustrés que sur certains des schémas, les différents modes de réalisation décrits ci-dessus peuvent être combinés.

Sur ces figures, les éléments identiques à ceux illustrés dans l'exemple de la Fig. 2 sont indiqués avec les mêmes références et ne sont pas décrits à nouveau.

La FIG.4A illustre un premier exemple de dispositif dans lequel le microscope interférométrique ne comprend qu'un seul objectif de microscope, à savoir le premier le premier objectif de microscope 202. Le bras objet comprend un élément 403 de compensation de la dispersion chromatique, par exemple une lame de verre.

Dans cet exemple, la surface réfléchissante de référence 207 est fixe.

Chaque image tomographique unidimensionnelle est produite dans cet exemple à partir d'une pluralité d'images interférométriques unidimensionnelles acquises par le détecteur pour différentes positions de ladite ligne de focalisation au cours du balayage unidirectionnel. Ceci est rendu possible du fait que la surface réfléchissante du dispositif de balayage de la ligne de focalisation n'est pas conjuguée optiquement avec la pupille d'entrée du premier objectif de microscope. Ainsi, pour une pluralité de positions successives différentes de la ligne de focalisation résultant du balayage de lignes d'observation, les points d'images interférométriques successives acquises par le détecteur présentent des états d'interférence différents correspondant à des différences de marche (ou déphasages) différentes entre la lumière issue du bras de référence et la lumière issue du bras objet. A partir de la pluralité d'images interférométriques unidimensionnelles, il est possible de produire une image tomographique unidimensionnelle.

Dans cet exemple, la loi de variation de différence de marche entre deux acquisitions d'images interférométriques n'est pas connue de façon aussi déterministe que lorsqu'on déplace, par exemple, la surface réfléchissante de référence.

La déposante a montré cependant qu'on pouvait générer des images tomographiques unidimensionnelles à partir d'une pluralité d'images interférométriques unidimensionnelles en déterminant la dispersion entre des images successives, comme décrit ci-dessus.

La FIG.4B illustre un deuxième exemple de dispositif dans lequel le microscope interférométrique est de type Linnik et comprend en plus du premier objectif de microscope 202 dans le bras objet, un deuxième objectif de microscope 203 dans le bras de référence. Avantageusement, les deux objectifs de microscope sont identiques.

Dans cet exemple, la surface réfléchissante de référence 207 est mobile en translation selon une direction axiale zᵣ grâce à des moyens de déplacement unidirectionnel de la surface réfléchissante de référence schématisés sur la Fig. 4B par une double flèche 405, ces moyens comprenant par exemple un moteur piézoélectrique.

Dans cet exemple, chaque image tomographique unidimensionnelle peut être produite à partir d'une pluralité d'images interférométriques unidimensionnelles acquises par le détecteur pour différentes positions de la surface réfléchissante de référence, entraînant des différences de marche différentes entre la lumière issue du bras de référence et la lumière issue du bras objet, et donc des états d'interférence différents pour les différentes images interférométriques unidimensionnelles. Dans ces exemples de réalisation, le déplacement de la ligne de focalisation pendant la production d'une image interférométrique unidimensionnelle est avantageusement sensiblement ou suffisamment faible pour ne pas dégrader l'image tomographique unidimensionnelle ainsi générée.

La FIG.4C illustre à nouveau un exemple de dispositif dans lequel le microscope interférométrique est de type Linnik.

Dans cet exemple, la surface réfléchissante de référence 207 est fixe.

Le microscope interférométrique comprend dans cet exemple une surface réfléchissante de renvoi 402 agencée dans le bras de référence et des moyens de déplacement 406, 408 de ladite surface réfléchissante de renvoi, selon l'une et/ou l'autre d'une direction axiale zᵣ et d'une direction latérale (yᵣ, dans l'exemple de la Fig. 4C). les moyens de déplacement 406, 408 comprennent par exemple un ou deux actionneurs piézoélectriques.

Il est possible au moyen de cet arrangement particulier, d'obtenir chaque image tomographique unidimensionnelle à partir d'une pluralité d'images interférométriques unidimensionnelles acquises par le détecteur pour différentes positions de la surface réfléchissante de renvoi.

Déplacer la surface réfléchissante de renvoi 402 permet d'acquérir une image tomographique unidimensionnel sans devoir faire osciller la surface de référence 207. Cela présente par exemple l'avantage de limiter le risque de variation de l'intensité lumineuse de la lumière issue du bras de référence lors d'un déplacement de la surface réfléchissante de référence, en particulier lorsque la surface de référence est dans un plan focal du deuxième objectif de microscope 203, comme illustré sur la Fig. 4C, une telle variation pouvant résulter d'impuretés sur la surface réfléchissante de référence.

Par ailleurs, en supprimant le déplacement de la surface réfléchissante de référence 207, on peut limiter encore l'encombrement du dispositif.

Dans les exemples illustrés sur les Figs 4A à 4C, le dispositif de microscopie tomographique comprend en outre des moyens de déplacement axial de la ligne de focalisation, selon une direction parallèle à l'axe optique z dudit premier objectif de microscope 202. Il s'agit de déplacer la surface de focalisation pour imager une pluralité d'images *en face* de l'objet 10, selon un procédé selon la présente description, à différentes profondeurs. Une image tridimensionnelle de l'objet à observer pourra alors être produite à partir de la pluralité d'images *en face.*

Comme illustré dans les Figs. 4A à 4C, les moyens de déplacement axial de la ligne de focalisation peuvent comprendre des moyens de déplacement solidaire d'un ensemble 209 comprenant le premier objectif de microscope 202 et le séparateur de faisceaux 204, selon une direction parallèle à l'axe optique z du premier objectif de microscope 202. Une telle configuration est avantageuse en ce qu'elle permet de déplacer simultanément et solidairement la surface de cohérence et la surface de focalisation, au cours du balayage axial, tout en minimisant le poids à déplacer. Cela permet de rendre maximale la vitesse de déplacement et ainsi de l'acquisition.

Bien entendu, d'autres moyens de déplacement axial de la ligne de focalisation peuvent être envisagés, non représentés sur les figures.

Par exemple, et de façon non limitative, les moyens de déplacement axial de la ligne de focalisation peuvent comprendre des moyens de déplacement solidaire d'un ensemble comprenant le premier objectif de microscope 202 et le dispositif de balayage 235, 237 de la ligne de focalisation ou d'un ensemble comprenant le premier objectif de microscope 202 et la surface réfléchissante de renvoi 402 du bras de référence lorsqu'elle est présente (Fig. 4C), ou d'un ensemble comprenant tous les éléments du microscope interférométrique 201.

Dans les exemples cités ci-dessus, on choisira avantageusement pour le premier objectif de microscope 202 et le deuxième objectif de microscope 203 s'il est présent, un objectif de microscope à immersion. En effet, dans ces exemples, les mouvements de la surface de cohérence et de la surface de focalisation sont solidaires ; l'adaptation de l'indice de réfraction de l'objet d'étude 10 avec celui du milieu dans lequel est immergé le premier objectif de microscope permet de les maintenir confondus.

Selon d'autres exemples (non représentés sur les figures), les moyens de déplacement axial de la ligne de focalisation peuvent comprendre des moyens de déplacement indépendants du premier objectif de microscope 202 d'une part et de l'ensemble formé du deuxième objectif de microscope 203, lorsqu'il est présent, avec la surface réfléchissante de référence 207, d'autre part. Les moyens de déplacement axial de la ligne de focalisation peuvent également comprendre des moyens de déplacement indépendants du premier objectif de microscope 202 d'une part et de la surface réfléchissante de renvoi 402 agencée sur le bras de référence, d'autre part (Fig. 4C).

Dans ces exemples, les mouvements de la surface de cohérence et de la surface de focalisation sont désolidarisés et on peut déplacer les deux plans d'une quantité différente de manière à les maintenir confondus.

La déposante a montré par ailleurs que, dans le cas notamment où, comme c'est illustré sur les Figs. 4A à 4C, la surface réfléchissante 235 du dispositif de balayage unidirectionnel de la ligne de focalisation n'est pas conjuguée optiquement avec la pupille d'entrée de l'objectif de microscope 202, une différence de marche (ou déphasage) peut être introduite pendant le balayage, ce qui entraîne une déformation de la surface de différence de marche nulle (surface de cohérence) par rapport à une surface parfaitement plane. Il en résulte que l'image *en face* formée ne peut pas être parfaitement nette sur tout le champ, car la surface de focalisation est quant à elle plane, et ne présente pas une grande profondeur de champ du fait qu'on utilise des objectifs de grande ouverture numérique (typiquement entre 0.3 et 0.8).

Pour compenser le déphasage introduit par le dispositif de balayage de la ligne de focalisation et faire coïncider surface de cohérence et surface de focalisation, le procédé de microscopie selon la présente description peut comprendre en outre, pour chaque image de la pluralité d'images tomographiques unidimensionnelles, l'introduction d'un déplacement axial additionnel de la surface réfléchissante de référence 207 (Fig. 2) ou de ladite surface réfléchissante de renvoi 402 (Fig. 4C).

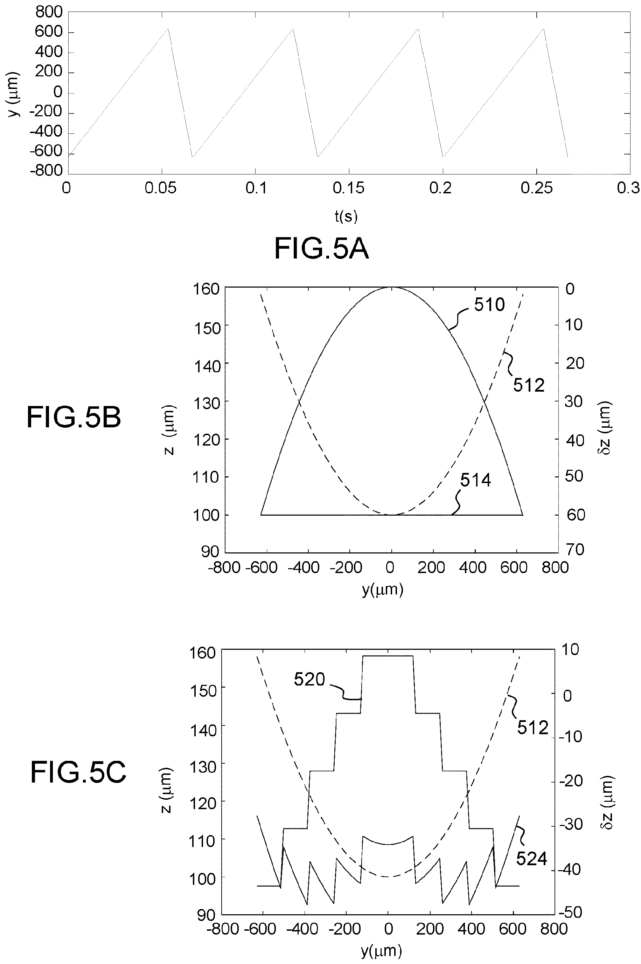

Les Figs. 5A à 5C représentent ainsi des schémas montrant selon un exemple le balayage unidirectionnel de la ligne de focalisation, en fonction du temps (Fig. 5A), et des schémas (Figs. 5B, 5C) montrant selon deux exemples, des coupes de la surface de cohérence lorsque la ligne de focalisation est déplacée latéralement selon le balayage illustré sur la Fig. 5A, avec ou sans compensation.

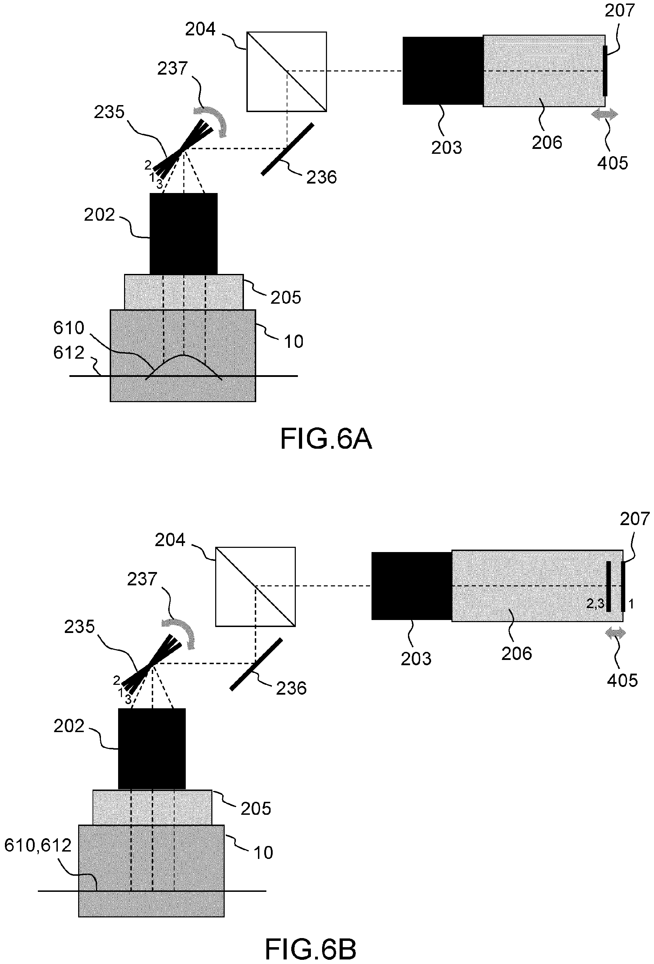

Les Figs. 6A et 6B représentent des schémas illustrant selon un exemple les plans de cohérence (610) et de focalisation (612) dans l'échantillon, avec et sans compensation. Dans l'exemple des Figs. 6A, 6B, la surface réfléchissante de référence 207 est déplacée, mais l'effet recherché serait le même si la surface réfléchissante de renvoi était déplacée.

Plus précisément, dans l'exemple de la Fig. 5B, la surface de cohérence, lorsque la ligne de focalisation est déplacée latéralement selon le balayage illustré sur la Fig. 5A, est représentée par la courbe 510. La position de différence de marche nulle est représentée à 100 µm en profondeur pour une position de la ligne de focalisation y=0. Comme illustré sur la Fig. 5B, la surface de cohérence est sensiblement parabolique lorsqu'aucun déphasage de compensation n'est appliqué. Avec compensation, par exemple au moyen d'une variation de position axiale de la surface réfléchissante de référence représentée sur la Fig.5B par la courbe 512, la surface de cohérence, illustrée par la courbe 514, est sensiblement plane et confondue avec la surface de focalisation.

Comme illustré sur les Figs. 6A, 6B, la surface réfléchissante de référence 207 est piloté dynamiquement, par exemple au moyen d'un transducteur piézoélectrique 405, de manière à introduire un déphasage au cours du mouvement du miroir de balayage 235 permettant de maintenir la position de la différence de marche nulle de l'interféromètre au niveau de l'objet (courbe 610) dans un plan 612 sensiblement perpendiculaire à l'axe optique de l'objectif de microscope 202. Les Figs. 6A, 6B représentent en particulier trois positions (1, 2, 3) du miroir de balayage, associées à trois positions de la surface de référence pour la correction de la planéité de la surface de cohérence (surface de différence de marche nulle).

Le transducteur piézoélectrique 405 peut suivre une loi dont la fréquence est égale à celle du miroir de balayage 235, et dont l'amplitude et la forme sont calibrés selon l'amplitude et la forme de l'écart de la position de différence de marche nulle par rapport au plan perpendiculaire à l'axe optique de l'objectif objet, en fonction de la position de la ligne de focalisation. Cet écart peut être évalué au préalable afin d'appliquer une loi adaptée au transducteur piézoélectrique. Cet écart est indépendant de l'échantillon, et uniquement dépendant de la position du miroir de balayage 235 par rapport à l'objectif de microscope 202. Une fois que la loi adaptée a été déterminée, théoriquement ou empiriquement, elle n'a donc plus besoin d'être ajustée.

Comme illustré sur la Fig. 5C, afin de simplifier le pilotage et le réglage du transducteur piézoélectrique 207, il est aussi possible d'introduire un déphasage 520 variant pas à pas (pilotage du transducteur piézoélectrique par pas), avec plusieurs points de fonctionnement au cours du mouvement du miroir de balayage 237. Ces points de fonctionnement sont choisis de manière à maintenir le sondage interférométrique dans un parallélépipède 524 dont la hauteur (selon l'axe optique de l'objectif de microscope 202) est considérée comme acceptable du point de vue de la netteté des images (donc par rapport à la profondeur de champ de l'objectif de microscope).

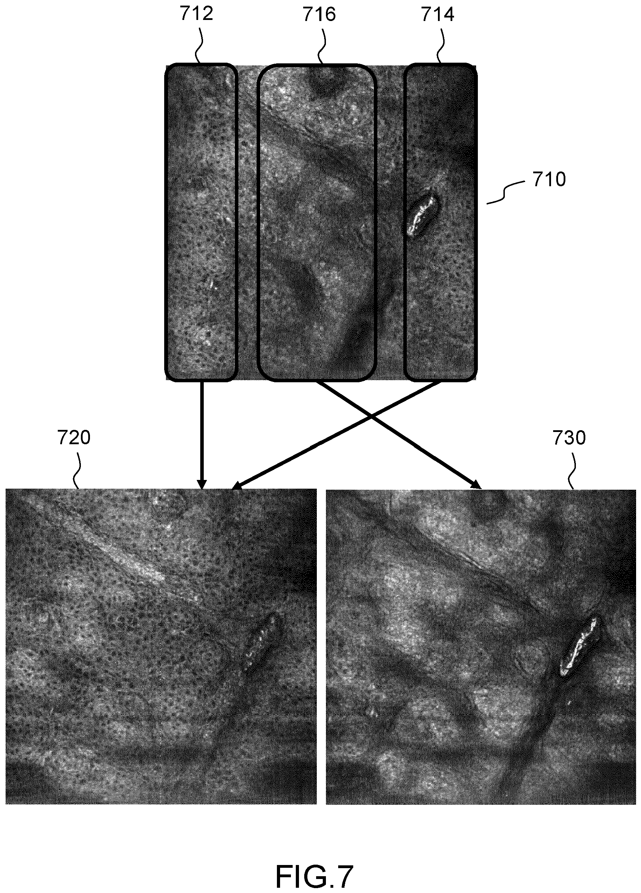

La Fig. 7 représente une image *in vivo* 710 d'un échantillon, l'image étant obtenue au moyen d'un exemple de procédé selon la présente description, sans compensation. L'image 710 est obtenue avec un échantillon formé du dos de la main d'un homme de 25 ans, sur un champ de 1.2 x 1.2 mm², avec un balayage du miroir de balayage 237 à une fréquence de 7 Hz.

Sur les régions 712 et 714 de l'image 710, on peut observer le *stratum granulosum* (avec cellules), et sur la région 716, on peut observer le *stratum corneum* (sans cellules), alors que ces couches sont physiquement à des profondeurs différentes. Cette image illustre bien que la surface de cohérence qui est la surface que l'on peut effectivement observer, n'est pas nécessairement parfaitement plane.

La compensation permet d'isoler ces régions.

Ainsi, les images 720 et 730 correspondent à des images du même champ, obtenues avec compensation pour faire coïncider la surface de cohérence avec la surface de focalisation à respectivement deux profondeurs. Les deux zones imagées sont ainsi le *stratum corneum* 720 et le *stratum granulosum* 730.

La compensation est obtenue avec oscillation de la surface de référence (lame de verre) à 7 Hz, selon une loi similaire à celle représentée en Fig. 5B (512). Les images tomographiques unidimensionnelles sont obtenues en additionnant au signal de compensation une oscillation sinusoïdale haute fréquence (10 kHz).

Bien que décrite à travers un certain nombre d'exemples de réalisation, le procédé et le dispositif de microscopie tomographique par cohérence optique à balayage linéaire selon la présente description comprend différentes variantes, modifications et perfectionnements qui apparaîtront de façon évidente à l'homme de l'art, pourvu que ces variantes, modifications ou perfectionnements découlent des revendications.

### Références

Réf 1.: D. Huang et al., "Optical cohérence tomography" Science 254(5035), 1178-1181 (1991)
Réf. 2 : A. F. Fercher et al. « Optical cohérence tomography - principles and applications », Reports on Progress in Physics 66 (2003) 239 - 303
Réf. 3 : J. A. Izatt,et al., « Optical cohérence microscopy in scattering media», OPTICS LETTERS / Vol. 19, No. 8 / April 15 (1994)
Réf 4.: Y. Chen et al. « High-resolution line-scanning optical cohérence microscopy", Optics Letters, Vol. 32, N°14, 1971 - 1973 (2007)

## Revendications

1. Dispositif (200) de microscopie tomographique par cohérence optique à balayage linéaire, comprenant :
une source de lumière (210) à large bande spectrale ;
un détecteur (222) avec une surface de détection linéaire (223);
un microscope interférométrique (201) comprenant un bras de référence à l'extrémité duquel est agencée une surface réfléchissante de référence (207), un bras objet configuré pour recevoir un objet à imager (10), un séparateur de faisceaux (204) couplant lesdits bras objet et de référence à ladite source de lumière et audit détecteur, et au moins un premier objectif de microscope (202) agencé sur ledit bras objet ;
un dispositif de filtrage spatial confocal unidimensionnel (212, 223) configuré pour coopérer avec ladite source de lumière pour éclairer ledit objet selon une ligne de focalisation située dans un espace objet dudit premier objectif de microscope, et configuré pour sélectionner la lumière rétrodiffusée par ledit objet et provenant de ladite ligne de focalisation pour former une image unidimensionnelle de ladite ligne de focalisation sur la surface de détection ;
un dispositif de balayage unidirectionnel (235, 237) de ladite ligne de focalisation comprenant une surface réfléchissante et des moyens de rotation de la surface réfléchissante selon un axe de rotation sensiblement perpendiculaire à un axe optique (z) du premier objectif de microscope, ladite surface réfléchissante étant agencée sur ledit bras objet, en amont dudit premier objectif de microscope, de telle sorte que le bras objet ne comprenne aucun élément optique pour la conjugaison optique de la surface réfléchissante avec une pupille d'entrée du premier objectif de microscope, le dispositif de balayage unidirectionnel étant configuré pour un balayage de la ligne de focalisation selon une direction latérale (y) sensiblement perpendiculaire à l'axe optique (z) dudit premier objectif de microscope ;
une unité de traitement (240) configurée pour produire au moins une image tomographique bidimensionnelle *en face* dudit objet à observer, agencée dans un plan (x, y) sensiblement perpendiculaire audit axe optique de l'objectif de microscope, à partir d'une pluralité d'images interférométriques unidimensionnelles de l'objet produites par le microscope interférométrique pour différentes positions de ladite ligne de focalisation au cours dudit balayage unidirectionnel et acquises par ledit détecteur.

2. Dispositif de microscopie selon la revendication 1, dans lequel ladite unité de traitement est configurée pour :
produire une pluralité d'images tomographiques unidimensionnelles dudit objet, chaque image de ladite pluralité d'images tomographiques unidimensionnelles étant produite à partir d'une pluralité d'images interférométriques unidimensionnelles acquises par ledit détecteur pour différentes positions de ladite ligne de focalisation au cours dudit balayage unidirectionnel; et
produire ladite image tomographique bidimensionnelle en face dudit objet à partir de ladite pluralité des images tomographiques unidimensionnelles.

3. Dispositif de microscopie selon la revendication 1, comprenant en outre :
des moyens de déplacement unidirectionnel (401) de ladite surface réfléchissante de référence selon une direction axiale (zᵣ); et dans lequel
ladite unité de traitement est configurée pour :
produire une pluralité d'images tomographiques unidimensionnelles dudit objet, chaque image de ladite pluralité d'images tomographiques unidimensionnelles étant produite à partir d'une pluralité d'images interférométriques unidimensionnelles acquises par ledit détecteur pour différentes positions de la surface réfléchissante de référence ; et
produire ladite image tomographique bidimensionnelle en face dudit objet à partir de ladite pluralité des images tomographiques unidimensionnelles.

4. Dispositif de microscopie selon la revendication 3, dans lequel :
pour chaque image de ladite pluralité d'images tomographiques unidimensionnelles, lesdits moyens de déplacement de ladite surface réfléchissante de référence sont configurés pour introduire en outre un déplacement axial additionnel de ladite surface réfléchissante de référence permettant de compenser un déphasage introduit par le dispositif de balayage de la ligne de focalisation.

5. Dispositif de microscopie selon la revendication 1, comprenant en outre :
une surface réfléchissante de renvoi (402) agencé dans le bras de référence et des moyens de déplacement (406, 408) de ladite surface réfléchissante de renvoi, selon l'une et/ou l'autre d'une direction axiale (zᵣ) et d'une direction latérale (yᵣ);
et dans lequel :
ladite unité de traitement est configurée pour :
produire une pluralité d'images tomographiques unidimensionnelles dudit objet, chaque image de ladite pluralité d'images tomographiques unidimensionnelles étant produite à partir d'une pluralité d'images interférométriques unidimensionnelles acquises par ledit détecteur pour différentes positions de ladite surface réfléchissante de renvoi ; et
produire ladite image tomographique bidimensionnelle *en face* dudit objet à partir de ladite pluralité des images tomographiques unidimensionnelles.

6. Dispositif de microscopie selon la revendication 5, dans lequel :
pour chaque image de ladite pluralité d'images tomographiques unidimensionnelles, lesdits moyens de déplacement de ladite surface réfléchissante de renvoi sont configurés pour introduire en outre un déplacement additionnel de ladite surface réfléchissante de renvoi permettant de compenser un déphasage introduit par le dispositif de balayage de la ligne de focalisation.

7. Dispositif de microscopie selon l'une quelconque des revendications précédentes, comprenant en outre un dispositif de compensation de la dispersion chromatique (403) agencé sur l'un et/l'autre desdits bras objet et de référence.

8. Dispositif de microscopie selon l'une quelconque des revendications précédentes, dans lequel ledit microscope interférométrique est un microscope de Linnik, comprenant en outre un deuxième objectif de microscope (203), agencé sur ledit bras de référence, lesdits bras de référence et objet étant disjoints.

9. Dispositif de microscopie selon l'une quelconque des revendications précédentes, comprenant en outre :
des moyens de déplacement axial de ladite ligne de focalisation, selon une direction parallèle audit axe optique dudit premier objectif de microscope pour un déplacement de ladite ligne de focalisation en profondeur dans l'objet ; et dans lequel :
l'unité de traitement est configurée pour produire en outre une image tridimensionnelle dudit objet à observer, à partir d'une pluralité d'images *en face* produites pour différentes profondeur de la ligne de focalisation.

10. Dispositif de microscopie selon la revendication 9, dans lequel :
lesdits moyens de déplacement axial de la ligne de focalisation comprennent des moyens de déplacement solidaire (208) d'un ensemble (209) comprenant ledit premier objectif de microscope et ledit séparateur de faisceaux, selon une direction parallèle audit axe optique dudit premier objectif de microscope.

11. Procédé de microscopie tomographique par cohérence optique à balayage linéaire, comprenant :
la formation d'un faisceau d'éclairage au moyen d'une source de lumière (210) à large bande spectrale;
la séparation du faisceau d'éclairage, au moyen d'un séparateur de faisceaux (204), en une première fraction de lumière et une deuxième fraction de lumière, ladite première fraction de lumière étant envoyée dans un bras de référence à l'extrémité duquel est agencé une surface réfléchissante de référence (207), ladite deuxième fraction de lumière étant envoyée dans un bras objet recevant un objet à imager (10) ;
la focalisation de ladite deuxième fraction de lumière, au moyen d'un premier objectif de microscope (202) agencé sur ledit bras objet et coopérant avec un dispositif de filtrage spatial confocal, pour éclairer ledit objet à imager selon une ligne de focalisation située dans un espace objet dudit objectif de microscope;
la sélection, au moyen dudit dispositif de filtrage spatial confocal, de la lumière rétrodiffusée par l'objet et provenant de ladite ligne de focalisation pour former une image unidimensionnelle de ladite ligne de focalisation sur une surface de détection linéaire (223) d'un détecteur (222);
la combinaison, au moyen dudit séparateur de faisceaux, de la lumière rétrodiffusée par l'objet ainsi sélectionnée et de la lumière issue de la réflexion par la surface réfléchissante du bras de référence de ladite première fraction de lumière, pour générer une image interférométrique unidimensionnelle ;
le balayage unidirectionnel de ladite ligne de focalisation selon une direction latérale (y) sensiblement perpendiculaire à un axe optique (z) dudit premier objectif de microscope, au moyen d'un dispositif de balayage (235, 237) comprenant une surface réfléchissante et des moyens de rotation de la surface réfléchissante selon un axe de rotation sensiblement perpendiculaire audit axe optique du premier objectif de microscope, ladite surface réfléchissante étant agencée sur ledit bras objet en amont dudit premier objectif de microscope, de telle sorte que le bras objet ne comprenne aucun élément optique pour la conjugaison optique de la surface réfléchissante avec une pupille d'entrée du premier objectif de microscope;
la production, au moyen d'une unité de traitement (240) d'au moins une image tomographique bidimensionnelle *en face* dudit objet à observer, agencée dans un plan (x, y) sensiblement perpendiculaire audit axe optique de l'objectif de microscope, à partir d'une pluralité d'images interférométriques unidimensionnelles acquises par ledit détecteur pour différentes positions de ladite ligne de focalisation au cours dudit balayage unidirectionnel.

12. Procédé de microscopie selon la revendication 11, dans lequel la production de ladite au moins une image tomographique bidimensionnelle *en face* dudit objet comprend :
la production d'une pluralité d'images tomographiques unidimensionnelles dudit objet, chaque image de ladite pluralité d'images tomographiques unidimensionnelles étant produite à partir d'une pluralité d'images interférométriques unidimensionnelles acquises par ledit détecteur pour différentes positions de ladite ligne de focalisation au cours dudit balayage unidirectionnel; et
la production de ladite image tomographique bidimensionnelle *en face* dudit objet à partir de ladite pluralité des images tomographiques unidimensionnelles.

13. Procédé de microscopie selon la revendication 11, dans lequel la production de ladite au moins une image tomographique bidimensionnelle *en face* dudit objet comprend :
la production d'une pluralité d'images tomographiques unidimensionnelles dudit objet, chaque image de ladite pluralité d'images tomographiques unidimensionnelles étant produite à partir d'une pluralité d'images interférométriques unidimensionnelles acquises par ledit détecteur pour différentes positions de la surface réfléchissante de référence (207) ou pour différentes positions d'une surface réfléchissante de renvoi (402) agencé dans le bras de référence; et
la production de ladite image tomographique bidimensionnelle *en face* dudit objet à partir de ladite pluralité des images tomographiques unidimensionnelles.

14. Procédé de microscopie selon la revendication 13, comprenant en outre :
pour chaque image de ladite pluralité d'images tomographiques unidimensionnelles, l'introduction d'un déplacement axial additionnel de ladite surface réfléchissante de référence ou de ladite surface réfléchissante de renvoi, permettant de compenser un déphasage introduit par le dispositif de balayage de la ligne de focalisation.

15. Procédé de microscopie selon l'une quelconque des revendications 11 à 14, comprenant en outre :
le déplacement axial de ladite ligne de focalisation en profondeur dans l'objet, selon une direction parallèle audit axe optique dudit premier objectif de microscope;
la production d'une image tridimensionnelle dudit objet à observer, à partir d'une pluralité d'images *en face* produites pour différentes profondeurs de la ligne de focalisation.

## Patentansprüche

1. Vorrichtung (200) zur tomographischen optischen Kohärenz-Mikroskopie mit linearer Abtastung, aufweisend:
eine Lichtquelle (210) mit breitem Spektralbereich;
einen Detektor (222) mit einer linearen Detektionsfläche (223);
ein interferometrisches Mikroskop (201), aufweisend einen Referenzarm, an dessen Ende eine reflektierende Referenzoberfläche (207) angeordnet ist, einen Objektarm, der so konfiguriert ist, dass er ein abzubildendes Objekt (10) aufnimmt, einen Strahlteiler (204), der den Objektarm und den Referenzarm mit der Lichtquelle und dem Detektor koppelt, und mindestens ein erstes Mikroskopobjektiv (202), das an dem Objektarm angeordnet ist;
eine eindimensionale konfokale Raumfiltervorrichtung (212, 223), die so konfiguriert ist, dass sie mit der Lichtquelle zusammenarbeitet, um das Objekt entlang einer Fokuslinie zu beleuchten, die sich in einem Objektraum des ersten Mikroskopobjektivs befindet, und die so konfiguriert ist, dass sie das von dem Objekt zurückgestreute und von der Fokuslinie kommende Licht auswählt, um ein eindimensionales Bild der Fokuslinie auf der Detektionsfläche zu erzeugen ;
eine Vorrichtung (235, 237) zum unidirektionalen Abtasten der Fokuslinie, aufweisend eine reflektierende Oberfläche und Mittel zum Drehen der reflektierenden Oberfläche um eine Drehachse, die im Wesentlichen senkrecht zu einer optischen Achse (z) des ersten Mikroskopobjektivs ist, wobei die reflektierende Oberfläche an dem Objektarm stromaufwärts von dem ersten Mikroskopobjektiv angeordnet ist, so dass der Obj ektarm kein optisches Element zur optischen Konjugation der reflektierenden Oberfläche mit einer Eintrittspupille des ersten Mikroskopobjektivs aufweist, wobei die Vorrichtung zum unidirektionalen Abtasten für ein Abtasten der Fokussierungslinie in einer seitlichen Richtung (y) im Wesentlichen senkrecht zu der optischen Achse (z) des ersten Mikroskopobjektivs konfiguriert ist,
eine Verarbeitungseinheit (240), die so konfiguriert ist, dass sie mindestens ein zweidimensionales tomographisches Bild von vor dem zu beobachtenden Objekt erzeugt, das in einer Ebene (x, y) angeordnet ist, die im Wesentlichen senkrecht zur optischen Achse des Mikroskopobjektivs verläuft, aus einer Vielzahl von eindimensionalen interferometrischen Bildern des Objekts, die vom interferometrischen Mikroskop für verschiedene Positionen der Fokussierungslinie während des unidirektionalen Scannens erzeugt und vom Detektor erfasst werden.

2. Vorrichtung zur Mikroskopie nach Anspruch 1, wobei die Verarbeitungseinheit konfiguriert ist zum:
Erzeugen einer Vielzahl von eindimensionalen tomographischen Bildern des Objekts, wobei jedes der Vielzahl von eindimensionalen tomographischen Bildern aus einer Vielzahl von eindimensionalen interferometrischen Bildern erzeugt wird, die von dem Detektor für verschiedene Positionen der Fokussierungslinie während des unidirektionalen Scannens erfasst werden; und
Erzeugen des zweidimensionalen tomographischen Bildes vor dem Objekt aus der Vielzahl der eindimensionalen tomographischen Bilder.

3. Vorrichtung zur Mikroskopie nach Anspruch 1, aufweisend ferner:
eine Einrichtung (401) zum unidirektionalen Bewegen der reflektierenden Referenzoberfläche in einer axialen Richtung (zᵣ); und bei der
die Verarbeitungseinheit konfiguriert ist zum:
Erzeugen einer Vielzahl von eindimensionalen tomographischen Bildern des Objekts, wobei jedes der Vielzahl von eindimensionalen tomographischen Bildern aus einer Vielzahl von eindimensionalen interferometrischen Bildern erzeugt wird, die von dem Detektor für verschiedene Positionen der reflektierenden Referenzoberfläche erfasst werden; und
Erzeugen des zweidimensionalen tomographischen Bildes vor dem Objekt aus der Vielzahl der eindimensionalen tomographischen Bilder.

4. Mikroskopische Vorrichtung nach Anspruch 3, wobei:
für jedes Bild der Mehrzahl von eindimensionalen tomographischen Bildern die Einrichtung zum Bewegen der reflektierenden Referenzoberfläche so konfiguriert ist, dass sie zusätzlich ein zusätzliches axiales Bewegen der reflektierenden Referenzoberfläche einführt, um eine durch die Vorrichtung zum Abtasten der Fokussierungslinie eingeführte Phasenverschiebung zu kompensieren.

5. Mikroskopische Vorrichtung nach Anspruch 1, aufweisend ferner:
einer reflektierenden Umlenkoberfläche (402), die in dem Referenzarm angeordnet ist, und Einrichtungen zum Bewegen (406, 408) der reflektierenden Umlenkoberfläche in einer axialen Richtung (zr) und/oder einer lateralen Richtung (yᵣ); und wobei:
die Verarbeitungseinheit konfiguriert ist, zum:
Erzeugen einer Vielzahl von eindimensionalen tomographischen Bildern des Objekts, wobei jedes der Vielzahl von eindimensionalen tomographischen Bildern aus einer Vielzahl von eindimensionalen interferometrischen Bildern erzeugt wird, die von dem Detektor für verschiedene Positionen der reflektierenden Umlenkoberfläche erfasst werden; und
Erzeugen des zweidimensionalen tomographischen Bildes vor dem Objekt aus der Mehrzahl der eindimensionalen tomographischen Bilder.

6. Mikroskopische Vorrichtung nach Anspruch 5, wobei:
die Einrichtung zum Bewegen der reflektierenden Umlenkoberfläche für jedes Bild der Mehrzahl von eindimensionalen tomographischen Bildern so konfiguriert ist, dass sie zusätzlich ein zusätzliches Bewegen der reflektierenden Umlenkoberfläche einführt, um eine durch die Vorrichtung zum Abtasten der Fokussierungslinie eingeführte Phasenverschiebung zu kompensieren.

7. Mikroskopische Vorrichtung nach einem der vorhergehenden Ansprüche, aufweisend ferner eine Vorrichtung zur Kompensation der chromatischen Dispersion (403), die an einem und/oder dem anderen von Objektarm und Referenzarm angeordnet ist.

8. Vorrichtung zur Mikroskopie nach einem der vorhergehenden Ansprüche, wobei das interferometrische Mikroskop ein Linnik-Mikroskop ist, aufweisend ferner ein zweites Mikroskopobjektiv (203), das an dem Referenzarm angeordnet ist, wobei der Referenzarm und der Objektarm voneinander getrennt sind.

9. Vorrichtung zur Mikroskopie nach einem der vorhergehenden Ansprüche, aufweisend ferner:
Einrichtungen zum axialen Bewegen der Fokussierungslinie, in einer Richtung parallel zu der optischen Achse des ersten Mikroskopobjektivs, für ein Bewegen der Fokussierungslinie in die Tiefe des Objekts; und wobei:
die Verarbeitungseinheit konfiguriert zum Erzeugen eines dreidimensionalen Bildes des zu beobachtenden Objekts aus einer Vielzahl von Vorderseitenbildern, die für verschiedene Tiefen der Fokussierungslinie erzeugt wurden.

10. Vorrichtung zur Mikroskopie nach Anspruch 9, wobei:
die Einrichtungen zum Bewegen der Fokussierungslinie Mittel zum integralen Bewegen (208) einer Baugruppe (209), die das erste Mikroskopobjektiv und den Strahlteiler aufweist, in einer Richtung parallel zur optischen Achse des ersten Mikroskopobjektivs umfasst.

11. Verfahren zur tomographischen optischen Kohärenz-Mikroskopie mit linearer Abtastung, aufweisend:
Bilden eines Lichtstrahls mittels der Einrichtung einer Lichtquelle (210) mit breitem Spektralbereich;
Aufteilen des Lichtstrahls mittels eines Strahlteilers (204) in einen ersten Lichtanteil und einen zweiten Lichtanteil, wobei der erste Lichtanteil in einen Referenzarm geleitet wird, an dessen Ende eine reflektierende Referenzoberfläche (207) angeordnet ist, und der zweite Lichtanteil in einen Objektarm geleitet wird, der ein abzubildendes Objekt (10) aufnimmt;
Fokussieren des zweiten Lichtanteils mittels eines ersten Mikroskopobjektivs (202), das an dem Objektarm angeordnet ist und mit einer konfokalen Raumfiltervorrichtung zusammenwirkt, um das abzubildende Objekt entlang einer Fokussierungslinie zu beleuchten, die sich in einem Objektraum des Mikroskopobjektivs befindet;
Auswählen, mittels der konfokalen Raumfiltervorrichtung, von Licht, das von dem Objekt zurückgestreut wird und von der Fokussierungslinie kommt, um ein eindimensionales Bild der Fokussierungslinie auf einer linearen Detektionsfläche (223) eines Detektors (222) zu bilden;
Kombinieren von Licht, das von dem so ausgewählten Objekt zurückgestreut wird, und von Licht, das von der reflektierenden Oberfläche des Objektarms des ersten Lichtanteils reflektiert wird, mittels des Strahlteilers, um ein eindimensionales interferometrisches Bild zu erzeugen;
unidirektionales Abtasten der Fokuslinie in einer seitlichen Richtung (y), die im Wesentlichen senkrecht zu einer optischen Achse (z) des ersten Mikroskopobjektivs verläuft, mittels einer Abtastvorrichtung (235, 237), die eine reflektierende Oberfläche und Mittel zum Drehen der reflektierenden Oberfläche um eine Drehachse aufweist, die im Wesentlichen senkrecht zu der optischen Achse des ersten Mikroskopobjektivs verläuft, wobei die reflektierende Oberfläche an dem Objektarm vor dem ersten Mikroskopobjektiv angeordnet ist, so dass der Objektarm kein optisches Element zur optischen Konjugation der reflektierenden Oberfläche mit einer Eintrittspupille des ersten Mikroskopobjektivs aufweisend ist;
Erzeugung, mittels einer Verarbeitungseinheit (240), mindestens eines zweidimensionalen tomographischen Bildes vor dem zu beobachtenden Objekt, das in einer Ebene (x, y) angeordnet ist, die im Wesentlichen senkrecht zu der optischen Achse des Mikroskopobjektivs ist, aus einer Vielzahl von eindimensionalen interferometrischen Bildern, die von dem Detektor für verschiedene Positionen der Fokussierungslinie während des unidirektionalen Scannens erfasst wurden.

12. Verfahren nach Anspruch 11, wobei die Erzeugung des mindestens einen zweidimensionalen tomographischen Bildes vor dem Objekt Folgendes umfasst:
Erzeugung einer Vielzahl von eindimensionalen tomographischen Bildern des Objekts, wobei jedes der Vielzahl von eindimensionalen tomographischen Bildern aus einer Vielzahl von eindimensionalen interferometrischen Bildern erzeugt wird, die von dem Detektor für verschiedene Positionen der Fokuslinie während des unidirektionalen Scannens erfasst werden; und
Erzeugung des zweidimensionalen tomographischen Bildes vor dem Objekt aus der Vielzahl der eindimensionalen tomographischen Bilder.

13. Verfahren nach Anspruch 11, wobei die Erzeugung des mindestens einen zweidimensionalen tomographischen Bildes vor dem Objekt Folgendes umfasst:
Erzeugung einer Vielzahl von eindimensionalen tomographischen Bildern des Objekts, wobei jedes der Vielzahl von eindimensionalen tomographischen Bildern aus einer Vielzahl von eindimensionalen interferometrischen Bildern erzeugt wird, die von dem Detektor für verschiedene Positionen der reflektierenden Referenzoberfläche (207) oder für verschiedene Positionen einer reflektierenden Umlenkoberfläche (402), die in dem Referenzarm angeordnet ist, erfasst werden; und
Erzeugung des zweidimensionalen tomographischen Bildes vor dem Objekt aus der Vielzahl der eindimensionalen tomographischen Bilder.

14. Verfahren nach Anspruch 13, aufweisend ferner:
für jedes Bild der mehreren eindimensionalen tomographischen Bilder das Einführen eines zusätzlichen axialen Bewegens der reflektierenden Referenzoberfläche oder der reflektierenden Umlenkoberfläche, um eine durch die Vorrichtung zum Abtasten der Fokussierungslinie eingeführte Phasenverschiebung zu kompensieren.

15. Verfahren nach einem der Ansprüche 11 bis 14, aufweisend ferner:
axiale Bewegung der Fokussierungslinie in die Tiefe des Objekts in einer Richtung parallel zur optischen Achse des ersten Mikroskopobjektivs;
Erzeugung eines dreidimensionalen Bildes des zu beobachtenden Objekts aus einer Vielzahl von Bildern von vorne, die für verschiedene Tiefen der Fokussierungslinie erzeugt wurden.

## Claims

1. A device (200) for line-scanning optical coherence tomographic microscopy, comprising:
a spectrally broadband light source (210);
a sensor (222) with a one-dimensional sensing surface (223) ;
an interferometric microscope (201) comprising a reference arm, at the end of which is arranged a reflecting reference surface (207), an object arm configured to receive an object to be imaged (10), a beam splitter (204) coupling said object arm and reference arm to said light source and to said sensor, and at least a first microscope objective (202) arranged on said object arm;
a one-dimensional confocal spatial filtering device (212, 213) configured to interact with said light source in order to illuminate said object along a focal line located in an object space of said first microscope objective, and configured to select the light backscattered by said object and coming from said focal line, so as to form a one-dimensional image of said focal line on the detection surface;
a device (235, 237) for unidirectional scanning of said focal line comprising a reflecting surface and means for rotating the reflecting surface along an axis of rotation substantially perpendicular to an optical axis (z) of the first microscope objective, said reflective surface being arranged on said object arm, upstream of said first microscope objective, such that the object arm does not include any optical element for the optical conjugation of the reflecting surface and an entrance pupil of the first microscope ojective, the device for unidirectional scanning being configured to scan the focal line in a lateral direction (y) substantially perpendicular to the optical axis (z) of said first microscope objective;
a processing unit (240) configured to produce at least one two-dimensional tomographic *en-face* image of said object to be observed, arranged in a plane (x, y) substantially perpendicular to said optical axis of the microscope objective, from a plurality of one-dimensional interferometric images of the object that are produced by the interferometric microscope for different positions of said focal line during said unidirectional scanning and are acquired by said sensor.

2. The microscopy device as claimed in claim 1, wherein said processing unit is configured to:
produce a plurality of one-dimensional tomographic images of said object, each image of said plurality of one-dimensional tomographic images being produced from a plurality of one-dimensional interferometric images acquired by said sensor for different positions of said focal line during said unidirectional scanning; and
produce said two-dimensional tomographic en-face image of said object from said plurality of one-dimensional tomographic images.

3. The microscopy device as claimed in claim 1, further comprising:
means for unidirectional displacement (401) of said reflecting reference surface in an axial direction (zᵣ); and wherein
said processing unit is configured to:
produce a plurality of one-dimensional tomographic images of said object, each image of said plurality of one-dimensional tomographic images being produced from a plurality of one-dimensional interferometric images acquired by said sensor for different positions of the reflecting reference surface; and
produce said two-dimensional tomographic en-face image of said object from said plurality of one-dimensional tomographic images.

4. The microscopy device as claimed in claim 3, wherein:
for each image of said plurality of one-dimensional tomographic images, said means for moving said reflecting reference surface are configured to further introduce an additional axial displacement of said reflecting reference surface, making it possible to compensate for a phase shift introduced by the device for scanning the focal line.

5. The microscopy device as claimed in claim 1, further comprising:
a fold reflecting surface (402) arranged in the reference arm, and means (406, 408) for moving said fold reflecting surface in one and/or the other of an axial direction (zᵣ) and a lateral direction (yᵣ); and wherein:
said processing unit is configured to:
produce a plurality of one-dimensional tomographic images of said object, each image of said plurality of one-dimensional tomographic images being produced from a plurality of one-dimensional interferometric images acquired by said sensor for different positions of said fold reflecting surface; and
produce said two-dimensional tomographic *en-face* image of said object from said plurality of one-dimensional tomographic images.

6. The microscopy device as claimed in claim 5, wherein:
for each image of said plurality of one-dimensional tomographic images, said means for moving said fold reflecting surface are configured to further introduce an additional displacement of said fold reflecting surface, making it possible to compensate for a phase shift introduced by the device for scanning the focal line.

7. The microscopy device as claimed in any one of the preceding claims, further comprising a device for chromatic dispersion compensation (403) arranged on one and/or the other of said object arm and reference arm.

8. The microscopy device as claimed in any one of the preceding claims, wherein said interferometric microscope is a Linnik microscope, further comprising a second microscope objective (203), arranged on said reference arm, said reference arm and object arm being separate.

9. The microscopy device as claimed in any one of the preceding claims, further comprising:
means for axial displacement of said focal line in a direction parallel to said optical axis of said first microscope objective for a displacement of said focal line in depth in the object; and wherein:
the processing unit is configured to further produce a three-dimensional image of said object to be observed, from a plurality of *en-face* images that are produced for different depths of the focal line.

10. The microscopy device as claimed in claim 9, wherein:
said means for axially moving the focal line comprise displacement means (208), integral with an assembly (209) comprising said first microscope objective and said beam splitter, for moving in a direction parallel to said optical axis of said first microscope objective.

11. A method for line-scanning optical coherence tomographic microscopy, comprising:
forming an illumination beam using a spectrally broadbandlight source (210);
separating the illumination beam, by means of a beam splitter (204), into a first light fraction and a second light fraction, said first light fraction being sent into a reference arm at the end of which a reflecting reference surface (207) is arranged, said second light fraction being sent into an object arm receiving an object to be imaged (10);
focusing said second light fraction, by means of a first microscope objective (202) arranged on said object arm and interacting with a confocal spatial filtering device, in order to illuminate said object to be imaged along a focal line located in an object space of said microscope objective;
selecting, by means of said confocal spatial filtering device, the light backscattered by the object and coming from said focal line in order to form a one-dimensional image of said focal line on a one-dimensional sensing surface (223) of a sensor (222);
combining, by means of said beam splitter, the thus selected light backscattered by the object and the light resulting from the reflection, by the reflecting surface of the reference arm, of said first light fraction, in order to generate a one-dimensional interferometric image;
scanning said focal line in one direction, in a lateral direction (y) substantially perpendicular to an optical axis (z) of said first microscope objective, by means of a scanning device (235, 237) comprising a reflecting surface and means for rotating the reflecting surface along an axis of rotation substantially perpendicular to said optical axis of the first microscope objective, said reflective surface being arranged on said object arm upstream of said first microscope objective, such that the object arm does not include any optical element for the optical conjugation of the reflecting surface and an entrance pupil of the first microscope objective;
producing, by means of a processing unit (240), at least one two-dimensional tomographic *en-face* image of said object to be observed, arranged in a plane (x, y) substantially perpendicular to said optical axis of the microscope objective, from a plurality of one-dimensional interferometric images acquired by said sensor for different positions of said focal line during said unidirectional scanning.

12. The microscopy method as claimed in claim 11, wherein producing said at least one two-dimensional tomographic en-*face* image of said object comprises:
producing a plurality of one-dimensional tomographic images of said object, each image of said plurality of one-dimensional tomographic images being produced from a plurality of one-dimensional interferometric images acquired by said sensor for different positions of said focal line during said unidirectional scanning; and
producing said two-dimensional tomographic *en-face* image of said object from said plurality of one-dimensional tomographic images.

13. The microscopy method as claimed in claim 11, wherein producing said at least one two-dimensional tomographic *en-face* image of said object comprises:
producing a plurality of one-dimensional tomographic images of said object, each image of said plurality of one-dimensional tomographic images being produced from a plurality of one-dimensional interferometric images acquired by said sensor for different positions of the reflecting reference surface (207) or for different positions of a fold reflecting surface (402) arranged in the reference arm; and
producing said two-dimensional tomographic en-face image of said object from said plurality of one-dimensional tomographic images.

14. The microscopy method as claimed in claim 13, further comprising:
for each image of said plurality of one-dimensional tomographic images, introducing an additional axial displacement of said reflecting reference surface or of said fold reflecting surface, making it possible to compensate for a phase shift introduced by the device for scanning the focal line.

15. The microscopy method as claimed in any one of claims 11 through 14, further comprising:
axially moving said focal line in depth in the object, in a direction parallel to said optical axis of said first microscope objective;
producing a three-dimensional image of said object to be observed, from a plurality of *en-face* images that are produced for different depths of the focal line.
